# EUROPÄISCHE PATENTSCHRIFT

(11) **EP 2 391 499 B1**
(45) Veröffentlichungstag und Bekanntmachung des Hinweises auf die Patenterteilung: **13.11.2013**
(21) Anmeldenummer: 10803582.5
(22) Anmeldetag: 02.12.2010
(51) Int. Cl.: B29C 67/00, B22F 3/105, B65D 85/68, B61C 11/04, B61B 13/00

(54) **RAPID-PROTOTYPING-ANLAGE AUFWEISEND EINE BAUBOX**
RAPID PROTOTYPING SYSTEM COMPRISING A CONSTRUCTION BOX
INSTALLATION DE PROTOTYPAGE RAPIDE COMPRENANT UN BOITIER DE CONSTRUCTION

(30) Priorität: 02.12.2009 DE 102009056696
(43) Veröffentlichungstag der Anmeldung: 07.12.2011
(73) Patentinhaber: Exone GmbH, 86167 Augsburg (DE)
(72) Erfinder: HÖCHSMANN, Rainer, 86863 Langenneufnach (DE); MÜLLER, Alexander, 86343 Königsbrunn (DE); LUDL, Herbert, 86405 Meitingen (DE); KRABLER, Bernd, 86672 Thierhaupten (DE); LEINAUER, Thomas, 86420 Diedorf (DE)
(74) Vertreter: Viering, Jentschura & Partner
(86) Internationale Anmeldenummer: PCT/EP2010/068770
(87) Internationale Veröffentlichungsnummer: WO 2011/067352

(56) Entgegenhaltungen:
- EP-A1- 2 292 412
- WO-A2-03/020616
- DE-A1- 2 516 826
- US-A- 6 066 285
- US-A1- 2010 228 381

## Beschreibung

Die vorliegende Erfindung betrifft eine Anlage zum schichtweisen Aufbau eines Formkörpers durch Ausbilden übereinander liegender Schichten von Baumaterial auf einem Baufeld und durch selektives Verfestigen eines Teilbereichs der jeweiligen Baumaterial-Schicht vor dem Ausbilden der nächstfolgenden Schicht, wobei die Anlage mit einer Baubox versehen ist.

Eine derartige Anlage (z.B. eine sog. Rapid-Prototyping-Anlage) kann einen horizontal verfahrbaren Beschichter aufweisen, mit dem gleichmäßige Schichten aus dem zu verfestigenden Baumaterial, z.B. ein Partikelmaterial oder ein Gemisch enthaltend Partikelmaterial, in mehrfacher Wiederholung auf das Baufeld aufgebracht werden können, wozu der Beschichter horizontal über das Baufeld hin verfahrbar ist.

Die jeweilige Schicht wird nach ihrer Aufbringung in einem selektiven Teilbereich derselben verfestigt, so dass der Formkörper aus den selektiv verfestigten Teilbereichen aufgebaut wird. Zur selektiven Verfestigung des Teilbereichs der jeweiligen Baumaterial-Schicht kann z.B. eine Druckvorrichtung mit einem entlang eines Druckkopf-Trägers in einer ersten Horizontalrichtung verfahrbaren Druckkopf eingesetzt werden, wobei der Druckkopf-Träger selbst in einer zweiten Horizontalrichtung verfahrbar ist, so dass der Druckkopf z.B. mäanderförmig über das Baufeld hin verfahrbar ist. Der Druckkopf weist eine Mehrzahl von Düsen auf, durch die ein geeignetes fließfähiges, insbesondere flüssiges Behandlungsmittel (wie beispielsweise ein Bindemittel, z.B. ein Harz), das zu der selektiven Verfestigung des Teilbereichs beiträgt, gesteuert auf die selektiv zu verfestigende Schicht aufgegeben/aufgedruckt werden kann. Eine Alternative zu einem derartigen Druckverfahren stellt das sog. Lasersintern dar, bei dem die selektive Verfestigung des Teilbereichs der jeweiligen Schicht durch gezielte Einfuhr von Wärme mittels eines Lasers erfolgt.

Das Baufeld, auf welches die einzelnen Baumaterial-Schichten aus dem Beschichter in mehrfacher Wiederholung aufgebracht werden, kann z.B. von einer Bauplattform gebildet sein, z.B. von einer höhenverstellbaren Bauplattform, welche in dem Innenraum einer nach oben offenen Baubox aufgenommen ist. Bei Verwendung einer höhenverstellbaren Bauplattform kann diese zu Beginn eines Bauprozesses zum Aufbauen eines Formkörpers z.B. nach oben gefahren sein. Auf die nach oben gefahrene Bauplattform wird mittels des Beschichters eine erste Baumaterial-Schicht aufgebracht, woraufhin die aufgebrachte Schicht z.B. vermittels einer Druckvorrichtung in einem vorbestimmten Teilbereich selektiv verfestigt wird. Nachdem die erste Baumaterial-Schicht selektiv verfestigt wurde, wird die Bauplattform um eine Schichtdicke abgesenkt, woraufhin mittels des Beschichters eine zweite Baumaterial-Schicht auf die Bauplattform bzw. auf die zuvor selektiv verfestigte erste Baumaterial-Schicht aufgebracht wird. Anschließend wird die zweite Baumaterial-Schicht selektiv verfestigt, und die Bauplattform wird erneut um eine Schichtdicke abgesenkt. Diese Schritte werden solange wiederholt, bis der Formkörper aus den selektiv verfestigten Schichten hergestellt ist. Zum Entpacken des fertiggestellten Formkörpers kann die Bauplattform einfach wieder nach oben gefahren werden, so dass der Formkörper aus dem losen, nicht verfestigten Baumaterial entnommen werden kann.

Als eine Alternative hierzu sind im Stand der Technik Verfahren/Vorrichtungen bekannt, bei denen die Bauplattform nicht bewegt wird, d.h. während des Bauprozesses stationär ist, und der Beschichter sowie die Druckvorrichtung schrittweise angehoben werden, um den Vertikalabstand zwischen Beschichter/Druckvorrichtung und Baufeld konstant zu halten.

Die Baubox kann z.B. stationär an dem Rahmen/Baurahmen der Anlage montiert sein. Alternativ kann die Baubox als ein austauschbarer Behälter ausgebildet sein (= sogenannter Wechselbehälter), d.h. je Anlage sind mehrere Wechselbehälter vorgesehen, so dass während dem Entpacken eines Formteils, das in einem ersten Wechselbehälter aufgebaut wurde, in einem zweiten Wechselbehälter bereits ein weiteres Formteil aufgebaut werden kann. Ein Wechselbehälter ist z.B. in der DE 20 2006 010 327 U1 sowie der DE 100 47 615 A1 beschrieben.

Gemäß DE 20 2006 010 327 U1 kann ein Wechselbehälter mit Aussparungen versehen sein, durch welche ein Gabelstapler hindurchgreifen kann, um den Wechselbehälter in eine Station der Anlage oder aus dieser heraus zu bewegen.

Gemäß DE 100 47 615 A1 kann ein Wechselbehälter mit einer Transportöse versehen sein, die einen Transport des Wechselbehälters mittels eines Krans ermöglicht.

Die Zwischenliteratur EP 2 292 412 A1, lediglich relevant unter Art. 54(3) EPÜ, offenbart eine 3D-Modelliervorrichtung mit einer Baubox, welche mit einem Antriebsmechanismus versehen ist.

US 6 066 285 offenbart eine Anlage zum schichtweisen Aufbau eines Formkörpers aufweisend eine verfahrbare Baubox.

DE 100 47 614 A1 und DE 100 49 043 A1 offenbaren jeweils eine Rollenbahn, mit deren Hilfe ein Wechselbehälter in die Anlage hinein eingebracht und aus der Anlage herausgebracht werden kann.

Die Baubox ist zum Aufbauen des Formkörpers in dem Rahmen/Baurahmen der Anlage angeordnet und insbesondere an diesem fixiert (= Baubox-Bauposition). Z.B. kann in der Baubox-Bauposition der Baubereich, in dem das Formteil aufgebaut wird, von einer sog. horizontalen Baubereichsabdeckung oder horizontalen Baubereichsbegrenzung in der Art eines Rahmens umfangsseitig umgeben sein. Z.B. wird hierzu im Stand der Technik eine anlagenfeste, an dem Baurahmen der Anlage befestigte horizontale rahmenförmige Baubereichsbegrenzung verwendet. Die horizontale Baubereichsbegrenzung ist in einer Höhe angeordnet, die deutlich größer ist als die Höhe der Baubox, so dass die Baubox zu Beginn des Bauprozesses problemlos in die Baubox-Bauposition und unter die horizontale rahmenförmige Baubereichsbegrenzung gefahren werden kann. Anschließend wird die gesamte Baubox um einen Betrag angehoben, der der Differenz zwischen der Höhe der horizontalen Baubereichsabgrenzung und der Höhe der Baubox entspricht, so dass der obere Rand der Baubox auf Höhe der horizontalen Baubereichsbegrenzung ist und von dieser umfangsseitig umgeben wird. Sodann wird mittels des Beschichters auf die nach oben gefahrene Bauplattform die erste BaumaterialSchicht aufgebracht. Überschüssiges Baumaterial wird während des Bauprozesses auf der Baubereichsabdeckung bzw. Baubereichsbegrenzung angesammelt.

Es ist eine Aufgabe der Erfindung, eine Rapid-Prototyping-Anlage mit einer Baubox bereitzustellen, wobei die Baubox einfach und zuverlässig zu handhaben ist.

Hierzu stellt die vorliegende Erfindung eine Anlage nach Anspruch 1 bereit, welche eine Baubox und ein Schienensystem aufweist.

Weitere Ausführungsformen der Erfindung sind in den abhängigen Ansprüchen beschrieben.

Die Baubox hat eine Vorderwand, eine Rückwand und zwei Seitenwände, welche zusammen einen Bauboxinnenraum begrenzen. In dem Bauboxinnenraum ist eine Bauplattform aufgenommen, welche insbesondere höhenverstellbar ist. Die Baubox kann in der Draufsicht z.B. rechteckig ausgebildet sein.

Erfindungsgemäß ist die Baubox mit einem eigenen in die Baubox integrierten Baubox-Fahrantrieb ausgestattet, mit dem die Baubox zwischen einer Baubox-Bauposition, in der die Baubox zum Aufbauen des Formkörpers in dem Rahmen/Baurahmen der Anlage angeordnet und insbesondere an dem Baurahmen fixiert ist, und einer zusätzlichen Baubox-Position verfahrbar ist. Bevorzugt ist der Fahrantrieb als wenigstens ein Elektromotor ausgebildet, der an der Außenseite einer der Bauboxwände angeordnet ist. Die zusätzliche Baubox-Position ist eine Baubox-Entpackungsposition, in welcher die Baubox aus einem Baurahmen der Anlage herausgefahren ist und in welcher der aufgebaute Formkörper ausgepackt werden kann.

Mit dem eigenen Baubox-Fahrantrieb kann die Aufbauhöhe (= Höhe des Baufeldes bzw. der obersten Schicht) und folglich die Höhe der Anlage bzw. des Baugehäuses reduziert werden, da die Baubox mit dem integrierten Baubox-Fahrantrieb gezielt/geführt in die Bauposition verfahrbar ist, so dass eine anlagenfeste Begrenzungsplatte in einer geringen Höhe montiert sein kann, die lediglich um einen kleinen Betrag größer ist als die Höhe der Baubox. Des Weiteren kann die Baubox zügig zwischen der Baubox-Bauposition und z.B. der Entpackungsposition hin- und hergefahren werden, da zu Beginn und am Ende eines Bauprozesses, wenn sich die Baubox in der Bauposition befindet, lediglich ein Fixieren und Ausrichten der Baubox entlang der Baubox-Verfahrrichtung erforderlich ist (bzw. ein Lösen), d.h. die Baubox kann einfach in den Baurahmen gefahren werden, wobei nach Fixierung und Ausrichtung entlang der Verfahrrichtung sofort mit dem Baujob begonnnen werden kann. Zudem kann die Baubox gesteuert und automatisiert in den Baurahmen bzw. die Bauposition und aus dieser heraus gefahren werden, wozu der Baubox-Fahrantrieb z.B. an eine zentrale Steuereinrichtung/Regelungseinrichtung angeschlossen sein kann. Eine aufwendige separate Vorrichtung zum Ein- und Ausfahren der Baubox kann entfallen.

Der Baubox-Fahrantrieb kann zum Beispiel wenigstens ein an der Baubox befestigtes stehendes oder liegendes Zahnrad aufweisen, das jeweils von einem in die Baubox integrierten Baubox-Fahrmotor antreibbar ist. Als Fahrantrieb können auch mehrere Fahrmotoren, bevorzugt Elektromotoren, vorgesehen sein, die für einen Synchronlauf gesteuert oder miteinander gekoppelt sind. Der Fahrmotor kann z.B. an der Vorderseite der Baubox angebracht sein, z.B. in einem vorderen Zwischenraum, der zwischen der Vorderwand und einer vorderen Verkleidungswand ausgebildet ist. Das Zahnrad kann z.B. an der Bauboxunterseite angebracht sein. Alternativ kann das Zahnrad aber auch an einer Seitenwand der Baubox angebracht sein, insbesondere in einem unteren Bereich der Seitenwand an deren Außenseite. Das Zahnrad kann z.B. eine vertikale Radebene oder bevorzugt eine horizontale Radebene aufweisen. Z.B. können auch mehrere Zahnräder an der Baubox angebracht sein, die von einem gemeinsamen Fahrmotor mittels eines Getriebes oder von synchron laufenden gesonderten Fahrmotoren angetrieben werden. Das an der Baubox befestigte Zahnrad kann mit einer Zahnstange zusammenwirken. Hierzu kann das Zahnrad in die Zahnstange eingreifen und auf der Zahnstange abrollen, wenn es von dem Fahrmotor angetrieben wird, so dass die Baubox entlang der Zahnstange verfahrbar ist. Die Baubox kann dabei z.B. über eine Schlepp- oder Rollkabelkette elektrisch mit der Anlage in Verbindung stehen, z.B. mit einer zentralen Steuereinrichtung, welche u.a. den Baubox-Fahrantrieb der Baubox steuert, und/oder mit einer zentralen Stromversorgung der Anlage. Zur Stromversorgung des Baubox-Fahrantriebs kann die Baubox z.B. aber auch mit einem Akku ausgestattet sein. Die Zahnstange kann z.B. eine seitliche Zahnfläche aufweisen, in welche ein Zahnrad mit horizontaler Radebene seitlich eingreift. Die Zahnstange kann z.B. zwischen zwei Roll- oder Gleitschienen, z.B. benachbart zu einer der beiden Roll- oder Gleitschienen, eines Schienensystems angeordnet sein, entlang welchem die Baubox mit Kufen gleiten oder rollen kann. Alternativ kann die Zahnstange z.B. durch eine der beiden Roll- oder Gleitschienen gebildet sein, auf denen die Baubox steht, wozu die Seitenfläche der Roll- oder Gleitschiene mit Zähnen versehen ist.

Die Baubox kann z.B. seitliche Führungsrollen aufweisen. Diese können z.B. an der Unterseite der Baubox befestigt sein. Alternativ können die Führungsrollen aber auch an einer der beiden Seitenwände der Baubox angebracht sein. Die Führungsrollen haben z.B. eine vertikale Rollachse. Die an der Baubox befestigten Führungsrollen können mit zwei Führungsschienen zusammenwirken, an denen die Führungsrollen abrollen. Eine der beiden Führungsschienen kann z.B. von der Zahnstange gebildet sein, d.h. von derjenigen Seitenfläche der Zahnstange, die der Zahnfläche gegenüberliegt, z.B. von der äußeren Seitenfläche der Zahnstange, wobei die innere Seitenfläche der Zahnstange als Zahnfläche ausgebildet ist. Die andere Führungsschiene kann z.B. durch eine der beiden oben erwähnten Abroll- oder Gleitschienen gebildet sein, z.B. von einer inneren oder äußeren Seitenfläche der Schiene. Z.B. können aber auch beide Führungsschienen durch die Abroll- oder Gleitschienen gebildet sein oder es können zwei separate Führungsschienen vorgesehen sein. Mit den seitlichen Führungsrollen kann eine Zentrierung der Baubox entlang einer Horizontalrichtung senkrecht zur Fahrtrichtung erfolgen, so dass die Baubox gezielt in die Bauposition gefahren werden kann. Eine gesonderte Zentrierung/Fixierung der Baubox in der Baubox-Bauposition entlang der Horizontalrichtung senkrecht zur Fahrtrichtung kann somit entfallen.

Die Baubox kann z.B. zwei oder mehrere Gleit- oder Rollkufen aufweisen, mit denen die Baubox auf entsprechenden Schienen eines Schienensystems gleitend/rollend aufliegt. Die Schienen des Schienensystems können z.B. Abrollschienen sein, d.h. Rollen aufweisen, auf denen die Kufen rollen. Alternativ können die Schienen des Schienensystems aber auch Gleitschienen sein, d.h. Gleitflächen aufweisen, auf denen die Gleitkufen gleiten.

Die Baubox kann z.B. an einer der beiden Seitenwände eine sich verjüngende Ausricht-Vertiefung aufweisen, z.B. eine konusförmige Vertiefung. An dem Rahmen/Baurahmen der Anlage kann z.B. ein Ausrichtelement, das senkrecht zur Verfahrrichtung der Baubox horizontal verstellbar ist, angebracht sein, welches einen sich verjüngenden Endabschnitt (z.B. einen Ausrichtdorn, z.B. einen konusförmigen Dorn) aufweist, der in der Baubox-Bauposition seitlich in die Vertiefung der Seitenwand eingreift. Die Ausricht-Vertiefung der Baubox und das anlagenseitige verstellbare Ausrichtelement bilden zusammen ein Bauboxfixierungssystem zum Ausrichten der Baubox entlang der Baubox-Fahrtrichtung und zum Fixieren der Baubox an dem Baurahmen. Zudem kann das Bauboxfixierungssystem ein anlagenseitiges Fixierelement (z.B. einen Bolzen) mit einem flach ausgebildeten Endabschnitt aufweisen, der gegen ein an der Bauboxwand angebrachtes Anschlagplättchen verstellbar drückbar ist. Als Gegenlager kann beispielsweise eine Schiene auf der entgegengesetzten Bauboxseite dienen. Ferner kann das Bauboxfixierungssystem einen Sensor aufweisen zum Ermitteln der Position der Baubox, insbesondere, ob die Baubox sich in der Bauposition befindet. Hierzu kann an der Baubox ein Sensor-Zielobjekt angebracht sein. Ferner kann das Bauboxfixierungssystem ein Steuersystem aufweisen, welches einen Antrieb des Ausrichtelements und des Fixierelements derart ansteuert, dass das Ausrichtelement in die Ausrichtvertiefung einfährt und das Fixierelement gegen das Anschlagplättchen gedrückt wird, wenn der Sensor detektiert, dass die Baubox in der Bauposition ist.

Zusätzlich zu dem eigenen Baubox-Fahrantrieb kann die Baubox einen eigenen in die Baubox integrierten Bauplattform-Hubantrieb bevorzugt in Form eines oder mehrerer Elektromotoren zum Anheben und Absenken der Bauplattform aufweisen. Der Hubantrieb kann wie der Fahrantrieb durch das Schleppkettenkabel zur Energieversorgung mit Strom gespeist werden und/oder an eine zentrale Steuereinrichtung/ Regelungseinrichtung angeschlossen sein. Z.B. kann der Bauplattform-Hubantrieb zusammen mit dem Baubox-Fahrantrieb in dem vorderen Zwischenraum angeordnet sein.

Der in die Baubox integrierte Bauplattform-Hubantrieb kann sowohl beim Bauprozess, wenn sich die Baubox in der Bauposition befindet, als auch beim Auspacken des fertiggestellten Formkörpers, wenn sich die Baubox in der Entpackungsposition befindet, verwendet werden, so dass ein separater Motor zum Entpacken/Auspacken eingespart werden kann. Ferner muss die Bauplattform nach Beendigung eines Baujobs vor dem Herausfahren aus dem Baurahmen in die Entpackungsposition nicht zunächst bis zum unteren Totpunkt abgesenkt werden, wie dies bei Anlagen der Fall ist, bei denen der Hubantrieb an dem Anlagenrahmen montiert ist, sondern kann unmittelbar nach Fertigstellung des Formkörpers und Lösen der Fixierung entlang Verfahrrichtung sofort mit dem bauboxseitigen Fahrantrieb in die Entpackungsposition gefahren werden, in der die Bauplattform von dem bauboxseitigen Hubantrieb angehoben wird. Somit kann durch die gemeinsame Anordnung von Bauplattform-Hubantrieb und Baubox-Fahrantrieb an der Baubox eine Zeitersparnis erzielt werden.

Die Anlage kann z.B. ein Baugehäuse aufweisen, welches den Baurahmen der Anlage, einschließlich des Baubereichs, des Beschichters und der Druckvorrichtung umgibt. Das Baugehäuse weist eine Baubox-Einfahr/Ausfahr-Öffnung auf, durch welche hindurch die Baubox zwischen der Baubox-Bauposition, in der die Baubox in dem Baugehäuse angeordnet ist, und der zusätzlichen Baubox-Position, in der die Baubox außerhalb des Baugehäuses angeordnet ist, verfahrbar ist. Dabei kann die Baubox-Bauposition derart gewählt sein, dass die Baubox-Einfahr/Ausfahr-Öffnung in der Baubox-Bauposition durch die Rückseite der Baubox geschlossen wird, so dass keine zusätzliche Tür und/oder eine Schutzvorrichtung erforderlich sind.

Die erfindungsgemäße Anlage kann z.B. in einem sog. einfachen Shuttle-Betrieb betrieben werden, bei dem eine einzige anlagenfeste erfindungsgemäße Baubox zwischen der Baubox-Bauposition und der zusätzlichen Baubox-Position entlang dem Schienensystem hin- und hergefahren wird, das entsprechend weit aus der einen und/oder anderen Seite des Baugehäuses herausreicht.

Gemäß einer abgewandelten Ausführungsform kann aber auch ein sogenannter doppelter Shuttle-Betrieb vorgesehen sein. Hierbei weist die Anlage eine erste erfindungsgemäße Baubox und eine zweite erfindungsgemäße Baubox auf, wobei die erste Baubox auf und entlang dem Schienensystem zwischen einer ersten Baubox-Entpackungsposition und einer gemeinsamen Baubox-Bauposition verfahrbar ist, und wobei die zweite Baubox auf und entlang dem Schienensystem zwischen einer zweiten Baubox-Entpackungsposition und der gemeinsamen Baubox-Bauposition verfahrbar ist. Die erste Baubox-Entpackungsposition und die zweite Baubox-Entpackungsposition sind dabei auf entgegengesetzten Seiten des Baurahmens angeordnet, wobei der Baurahmen an den entgegengesetzten Seiten jeweils eine Baubox-Öffnung aufweist, durch welche hindurch die jeweilige Baubox verfahrbar ist.

Die Erfindung wird im Folgenden anhand verschiedener Ausführungsformen mit Bezugnahme auf die Zeichnung näher erläutert. In der Zeichnung zeigen:
Figur 1 eine Perspektivansicht auf die vordere Stirnseite einer erfindungsgemäßen **Anlage 100** zum schichtweisen Aufbau eines Formköpers gemäß einer ersten Ausführungsform der Erfindung,
Figur 2 eine zweite Perspektivansicht der erfindungsgemäßen Anlage aus Fig. 1,
Figur 3 eine dritte Perspektivansicht der Anlage aus Fig. 1, wobei das Gehäuse der Anlage weggelassen ist,
Figur 4 eine vierte Perspektivansicht der Anlage aus Fig. 1, wobei das Gehäuse der Anlage weggelassen ist,
Figur 5 eine fünfte Perspektivansicht der Anlage aus Fig. 1, wobei das Gehäuse der Anlage weggelassen ist,
Figur 6 eine Perspektivansicht einer erfindungsgemäßen Anlage zum schichtweisen Aufbau eines Formköpers gemäß einer zweiten Ausführungsform der Erfindung,
Figur 7 eine Perspektivansicht auf die vordere Stirnseite und eine benachbarte Seitenwand einer erfindungsgemäßen **Baubox 200,**
Figur 8 die Ansicht aus Figur 7, wobei die Verkleidungswand an der vorderen Stirnseite weggelassen ist, um den Fahrantrieb und den Hubantrieb der Baubox zu zeigen,
Figur 9 eine Perspektivansicht auf die vordere Stirnseite der Baubox aus den Figuren 7 und 8, wobei die Baubox auf dem Schienensystem der Anlage angeordnet ist und wobei die Baubox in die Entpackungsposition gefahren ist,
die Figuren 9A und 9B weitere Ansichten der Baubox und des Schienensystems,
Figur 10 eine Perspektivansicht auf die vordere Stirnseite sowie eine weitere Seitenwand der Baubox, welche der in Figur 7 gezeigten Seitenwand abgewandt ist,
Figur 11 eine Perspektivansicht des Anlagenrahmens und der daran angebrachten Komponenten des Bauboxfixierungssystems,
Figur 12 eine Frontalansicht auf die vordere Stirnseite der Baubox, wobei sich die Baubox in der Bauposition befindet und an dem Anlagenrahmen fixiert ist,
Figur 13 eine Perspektivansicht auf die Oberseite der Baubox bzw. auf die darin aufgenommene Bauplattform, wobei sich die Baubox in der Bauposition befindet,
Figur 14 eine Detailansicht der anlagenfesten Baufeldabdeckung, welche sich unter Ausbildung einer Labyrinthdichtung entlang einer Seitenwand der Baubox erstreckt,
Figur 15 eine Detailansicht der zwischen der anlagenfesten Baufeldabdeckung und der Baubox ausgebildeten Labyrinthdichtung,
die Figuren 16 und 17 jeweils eine Perspektivansicht einer erfindungsgemäßen **Mischvorrichtung 300,**
Figur 18 eine Perspektivansicht auf die vordere Stirnseite eines erfindungsgemäßen **Beschichters 400,** wobei der Beschichter in seiner Betriebsposition ist, d.h. der Dosierschacht und der Vorlagebehälter des Beschichters sind jeweils an dem Beschichter-Träger befestigt,
Figur 19 eine Perspektivansicht des Beschichters aus Fig. 18 von vorne, wobei der Vorlagebehälter des Beschichters von dem Beschichter-Träger weg in eine Reinigungsposition geschwenkt ist, um z.B. die Verteilerschnecke des Vorlagebehälters zu reinigen,
Figur 20 eine Perspektivansicht des Beschichters aus Fig. 18 von hinten, wobei der Vorlagebehälter des Beschichters zusammen mit dem Zuführtrichter in eine Reinigungsposition geschwenkt ist, um z.B. die Zuführöffnung des Dosierschachts zu reinigen,
Figur 21 eine Perspektivansicht des Beschichters aus Fig. 18, wobei der Beschichter in die Anlage eingebaut ist und in seiner Betriebsposition ist und wobei die vordere Stirnwand der einzelnen Beschichter-Komponenten weggelassen ist,
Figur 22 eine Perspektivansicht einer erfindungsgemäßen **Druckvorrichtung 500,** welche einen Druckkopfträger und einen daran aufgehängten Druckkopf aufweist,
Figur 23 eine Detailansicht des Druckkopfes aus Fig. 22 und dessen Aufhängung an dem Druckkopfträger,
Figur 23a eine schematische Unteransicht des Druckkopfkopfes, um die Anordnung der Druckkopfdüsen zu veranschaulichen,
Figur 24 eine Perspektivansicht einer erfindungsgemäßen **Beschichter-Reinigungsvorrichtung 600,**
Figur 25 eine Perspektivansicht der Beschichter-Reinigungsvorrichtung aus Figur 24 und des Beschichters,
Figur 26 eine Perspektivansicht auf eine Seitenwand des Anlagengehäuses,
Figur 27 eine Perspektivansicht von dem horizontal verfahrbaren Druckkopf in seiner Ruhe- bzw. Parkposition und von einer benachbart zu dem Druckkopf angeordneten erfindungsgemäßen **Druckkopf-Reinigungsvorrichtung 700,** welche gemäß der gezeigten Ausführungsform zwei seitlich nebeneinander angeordnete Wischlippen aufweist,
Figur 28 eine Perspektivansicht der Druckkopf-Reinigungsvorrichtung aus Figur 27, wobei sich die zwei Wischlippen in der Druckkopf-Reinigungsposition befinden,
Figur 29 eine Perspektivansicht der Druckkopf-Reinigungsvorrichtung aus Figur 27, wobei sich die zwei Wischlippen in der Wischlippen-Regenerationsposition befinden, und
die Figuren 30a bis 30f verschiedene Ausführungsformen der erfindungsgemäßen Druckkopf-Reinigungsvorrichtung.

### Anlage 100

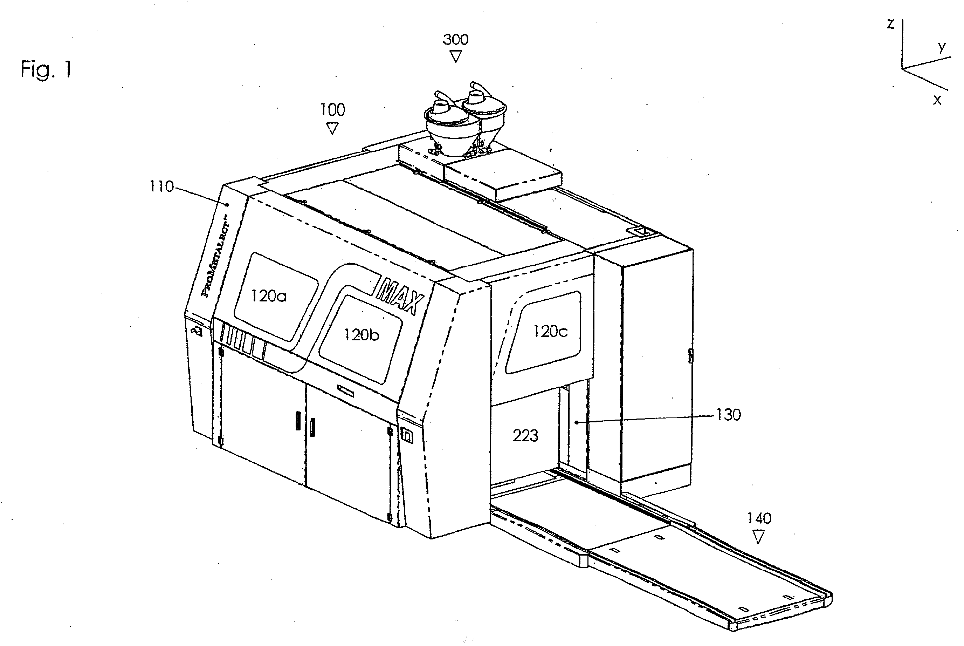

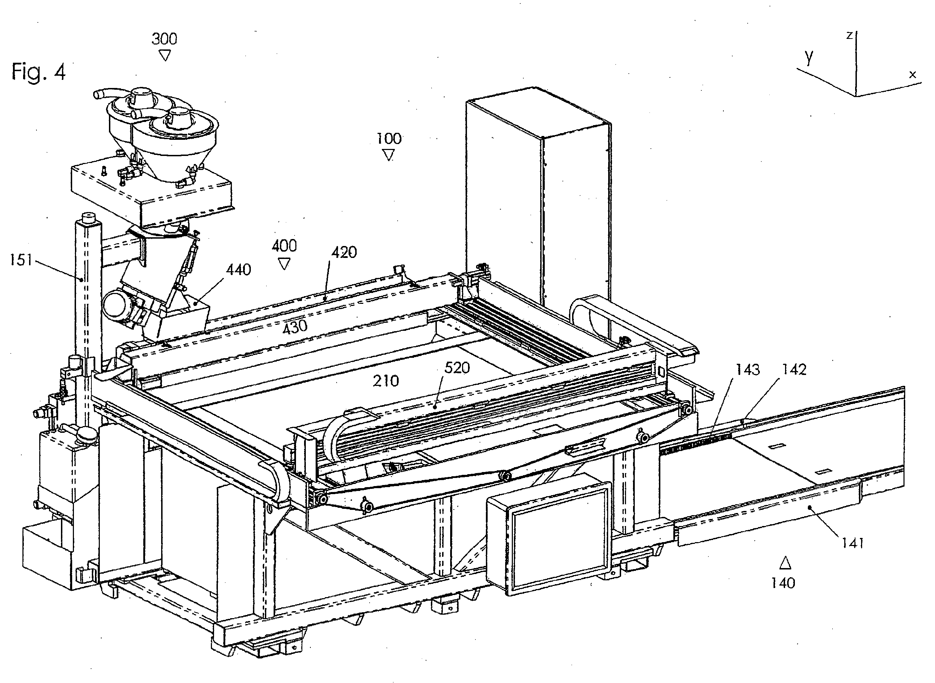

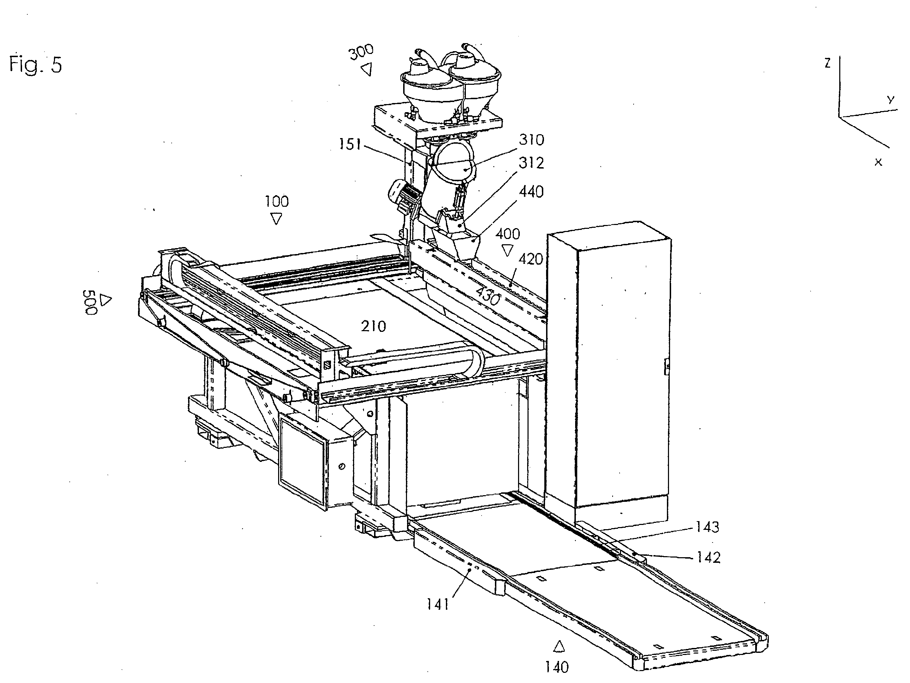

Die **Figuren 1 bis 5** zeigen eine Rapid-Prototyping-Anlage 100 gemäß einer ersten Ausführungsform der Erfindung, welche zum selektiven Verfestigen der Baumaterial-Schichten mit einer Druckvorrichtung ausgestattet ist. An dieser Stelle wird angemerkt, dass die meisten Komponenten der Anlage 100 auch auf andere Rapid-Prototyping-Anlagen anwendbar sind. Zum Beispiel können die Baubox 200, die Mischvorrichtung 300, der Beschichter 400 und die Beschichter-Reinigungsvorrichtung 600 problemlos, ggf. mit geringfügigen Modifikationen, in einer Anlage zum Lasersintern eingesetzt werden. Mit anderen Worten kann die Anlage 100 z.B. zu einer Laser-Sinter-Anlage umgerüstet werden, indem der Druckkopf 500 durch eine Strahlungsquelle bzw. einen Laser ersetzt wird.

Mit der Anlage 100 kann ein Formkörper, z.B. eine Gussform, unmittelbar aus zuvor generierten CAD-Daten hergestellt werden durch Ausbilden von übereinander liegenden Baumaterialschichten und durch selektives Verfestigen von Teilbereichen der jeweiligen Baumaterialschicht vor dem Ausbilden der nächsten Schicht.

Der Formkörper bzw. die Baumaterialschichten werden auf einer Bauplattform 210 einer Baubox 200 aufgebaut. Die Bauplattform 210 ist höhenverstellbar und kann vor dem Auftragen einer neuen Baumaterialschicht um eine Schichtdicke abgesenkt werden, so dass die Arbeitsebene (= oberste Baumaterialschicht) stets auf demselben Niveau ist.

Das Baumaterial weist Partikelmaterial auf. Als Partikelmaterial kann zum Beispiel Sand eingesetzt werden, insbesondere ein Sand wie er üblicherweise in der Gießereitechnik verwendet wird. Das Aufbringen der jeweiligen Baumaterialschicht erfolgt mit einem Beschichter 400, der horizontal über die Bauplattform 210 hin verfahrbar ist. Der Beschichter 400 wird über eine Mischvorrichtung 300 mit Baumaterial gespeist.

Zur selektiven Verfestigung der jeweiligen Baumaterialschicht wird eine Druckvorrichtung 500 mit einem horizontal verfahrbaren Druckkopf 510 eingesetzt, mit dem ein geeignetes Bindemittel auf die zu verfestigende Schicht aufgegeben/aufgedruckt werden kann, wozu der Druckkopf 510 mäanderförmig über die Baumaterialschicht hinweg gefahren wird. Das Partikelmaterial "verklebt" bzw. verfestigt das Partikelmaterial selektiv. Als Bindemittel kann z.B. ein Harz eingesetzt werden, z.B. Furanharz. Zudem ist es möglich, ein Mehrkomponentenbindemittel zu verwenden, wobei eine erste Bindemittel-Komponente (z.B. das Harz) über den Druckkopf 510 aufgedruckt wird, und wobei eine zweite Bindemittel-Komponente (z.B. ein Aktivator oder Härter) mit dem Partikelmaterial vermengt ist. Das durch den Drucker selektiv aufgedruckte Harz reagiert mit dem in der obersten Sandschicht vorliegenden Härter, wodurch das Harz aushärtet und dadurch einzelne Sandkörner miteinander verbindet/verklebt. Zudem wird durch das aushärtende Harz der zu verfestigende Abschnitt der obersten Schicht mit dem zu verfestigenden Abschnitt der unmittelbar unter der oberen Schicht angeordneten Schicht verbunden.

Vereinfacht wiedergegeben kann ein Formteil demnach z.B. wie folgt ausgebildet werden:
1. Bereitstellen einer Baumaterialmischung, enthaltend Formsand und Härter, unter Verwendung des Mischers 300,
2. Chargenweiser/Schichtweiser Auftrag des Baumaterials auf die Bauplattform 210 des Baubehälters 200 mit Hilfe des Beschichters 400,
3. Eindosieren von Harz in die oberste Baumaterialschicht unter Verwendung der Druckvorrichtung 500
4. und Wiederholen der Schritte 2 und 3, bis der Formkörper fertiggestellt ist.

Der Beschichter 400 und die Druckvorrichtung 500 sind in einem Gehäuse 110 untergebracht, in dem der oben beschriebene Bauprozess abläuft. Das Gehäuse 110 weist Fenster 120a-120d auf zum Beobachten des Prozessablaufs. Ferner weist das Gehäuse 110 eine stirnseitige Baubox-Einfahr/Ausfahr-Öffnung 130 auf, durch welche die Baubox 200 in das Gehäuse 110 hinein und aus diesem heraus gefahren werden kann. Wie aus Figur 1 ersichtlich ist, wird die Baubox-Einfahr/AusfahrÖffnung 130 durch eine hintere Stirnwand/Verkleidungswand 223 der Baubox 200 geschlossen, wenn die Baubox 200 in der Bauposition fixiert ist. Mit anderen Worten bildet die Baubox 200 in der Bauposition einen Teil der Anlagenverkleidung, so dass keine zusätzliche Tür oder Schutzvorrichtung notwendig ist.

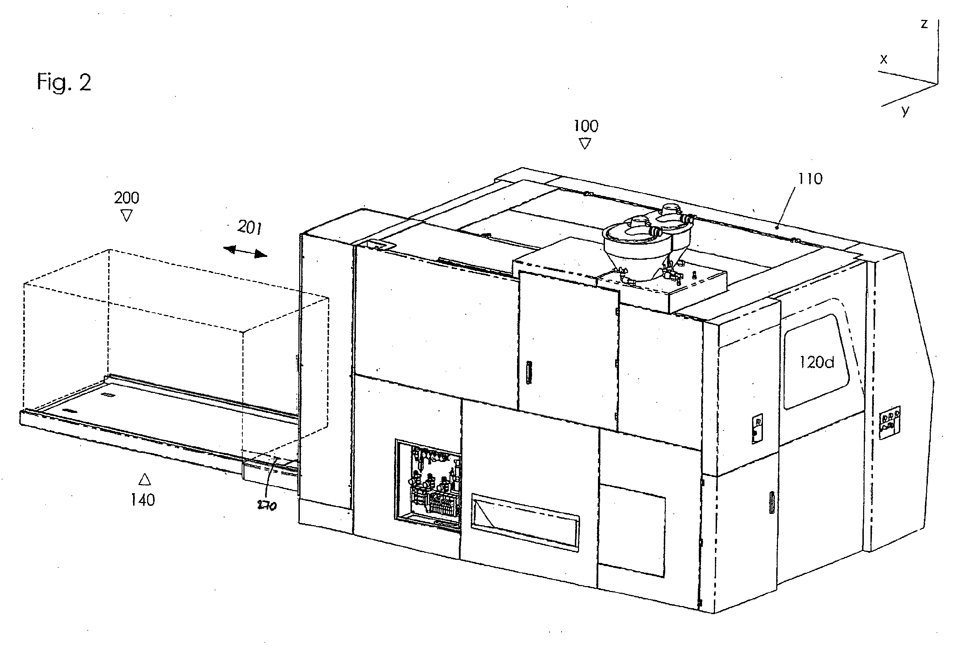

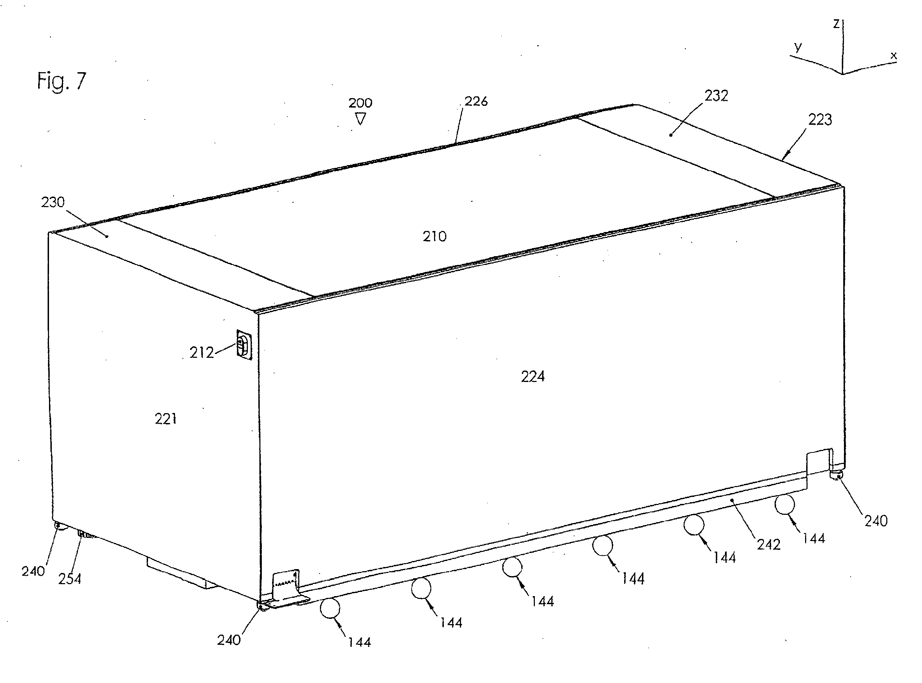

Nach Fertigstellung des Formköpers wird die Baubox 200 aus dem Gehäuse 110 heraus in die in Figur 2 durch gestrichelte Linien angedeutete Entpackungsposition gefahren. D.h., die Baubox 200 ist in Richtung des Pfeils 201 zwischen einer Bauposition und einer Entpackungsposition verfahrbar (siehe Figur 2). In der Entpackungsposition kann der fertige Formkörper ausgepackt und freigelegt werden, z.B. durch Anheben bzw. nach oben Fahren der Bauplattform 210 und durch Wegblasen oder Absaugen des losen, nicht verfestigten Formsands. Das Anheben bzw. Absenken der Bauplattform 210 in der Entpackungsposition kann automatisiert erfolgen oder manuell über einen Druckknopf 212 gesteuert werden (siehe Figur 7). Anschließend wird der Formkörper z.B. per Hand entnommen und ggf. einer abschließenden Reinigung unterzogen, wie z.B. einem Abbürsten. Daraufhin ist die Baubox 200 frei und kann erneut in das Gehäuse 110 bzw. in ihre Bauposition gefahren werden, so dass der nächste Baujob ausgeführt werden kann.

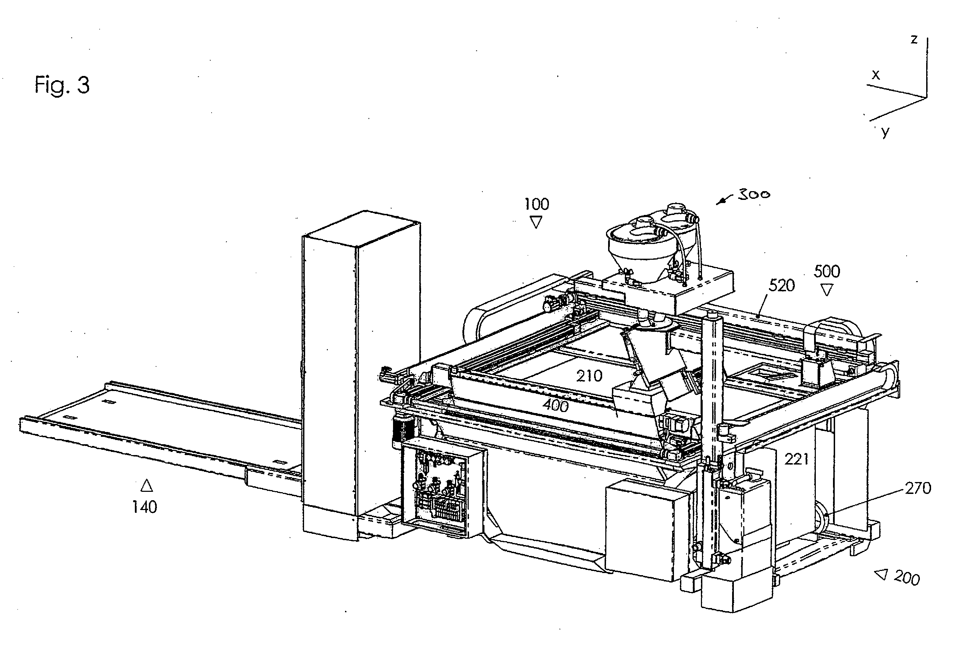

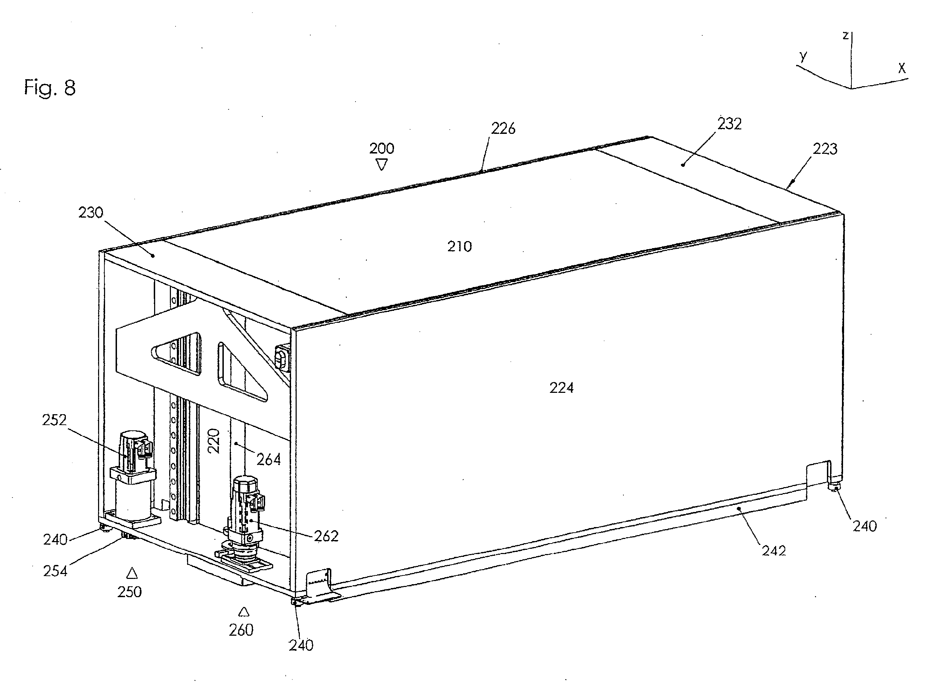

Die Baubox 200 wird somit ständig zwischen der Bauposition und der Entpackungsposition hin- und hergefahren, wozu die Baubox 200 auf einem Schienensystem 140 angeordnet ist (sog. einfacher Shuttle-Betrieb). D.h., die in den Figuren 1 bis 5 gezeigte Anlage 100 weist genau eine Baubox 200 auf. Die Baubox 200 ist somit nicht als Wechselbehälter ausgebildet, sondern vielmehr anlagenfest ausgebildet; insbesondere ist die Baubox 200 selbstfahrend ausgebildet, wozu sie einen bauboxseitigen, d.h. an der Baubox angebrachten, Fahrantrieb 250 mit eigenem Fahrmotor 252 aufweist (siehe Figur 8 sowie die unten stehende Beschreibung der Baubox), der über eine in das Gehäuse führende Schleppkette bzw. Schleppkabel 270 (siehe Figuren 2 und 3) mit Strom versorgt wird; ferner weist die Baubox 200 einen bauboxseitigen Hubantrieb 260 mit eigenem Hubmotor 262 auf, welcher ebenfalls über die Schleppkette 270 mit Strom versorgt wird (siehe hierzu Figur 8 sowie die unten stehende Beschreibung der Baubox).

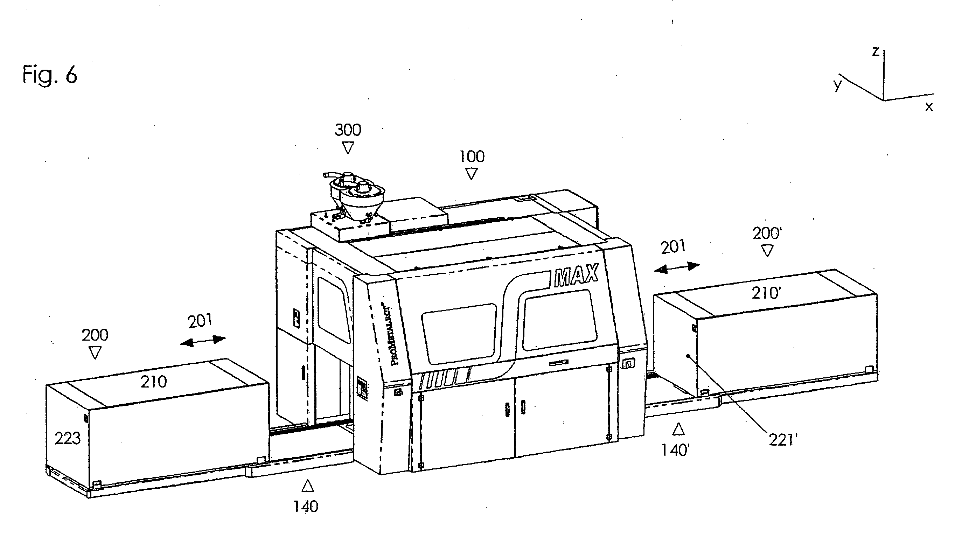

Wie in **Figur 6** gezeigt ist, kann die Anlage 100 gemäß einer anderen Ausführungsform der Erfindung aber auch eine zweite Baubox 200' aufweisen, die entlang eines zweiten Schienensystems 140 (oder eines gemeinsamen Schienensystems) und durch eine zweite stirnseitige Baubox-Einfahr/AusfahrÖffnung in dem Gehäuse 110, welche der ersten Baubox-Einfahr/Ausfahr-Öffnung abgewandt ist, entlang des Pfeils 201 zwischen der gemeinsamen Bauposition und einer zweiten Entpackungsposition hin- und herfahrbar ist. Folglich kann nach der Fertigstellung eines ersten Formkörpers unter Verwendung der ersten Baubox 200, die erste Baubox 200 in die ihr zugeordnete erste Entpackungsposition gefahren werden, um den Formkörper auszupacken. Sobald die Anlage 100 frei ist, d.h. die erste Baubox 200 aus der Anlage heraus gefahren ist, kann die zweite Baubox 200' in die Bauposition gefahren und fixiert werden, um einen zweiten Formkörper unter Verwendung der zweiten Baubox 200' herzustellen (sog. doppelter Shuttle-Betrieb). Mit dem doppelten Shuttle-Betrieb kann die Anlage 100 quasi-kontinuierlich betrieben werden, wohingegen mit dem einfachen Shuttle-System lediglich ein Batchbetrieb möglich ist. Die Baubox 200' ist wie die Baubox 200 anlagenfest und selbstfahrend ausgebildet. Im Übrigen entspricht die in Figur 6 gezeigte Anlage 100 der in den Figuren 1 bis 5 gezeigten Anlage 100.

Die Figuren 3 bis 5 zeigen die Anlage 100 ohne das Gehäuse 110. Die Baubox 200 befindet sich in der Bauposition, und die Bauplattform 210 ist nach oben gefahren. Der Druckkopf 510 der Druckvorrichtung 500 und der Beschichter 400 befinden sich jeweils in ihrer Parkposition. In der jeweiligen Parkposition sind Beschichter 400 und Druckvorrichtung 500 an gegenüberliegenden Seiten der Bauplattform 210 angeordnet, insbesondere sind der Druckkopfträger 520 und der Beschichter-Träger 430 parallel zueinander sowie parallel zu den Längsseiten der Bauplattform 210 angeordnet. Die beiden Träger 430 und 520 sind in y-Richtung über die Bauplattform 210 hin verfahrbar, d.h. in Querrichtung der Bauplattform 210 und senkrecht zu der Verfahrrichtung der Baubox 200. Ferner kann der Druckkopf 510 in x-Richtung, d.h. in Längsrichtung der Bauplattform 210, entlang des Druckkopfträgers 520 verfahren werden. In einer alternativen Ausführungsform können der Druckkopf-Träger 520 und der Beschichter-Träger 430 allerdings auch senkrecht zu der Längsachse der Bauplattform 210 angeordnet sein, d.h. an den sich gegenüberliegenden kurzen Seiten der Bauplattform 210, so dass sie in x-Richtung über die Bauplattform 210 hinweg verfahrbar sind. Die Mischvorrichtung 300 ist an einer vertikalen Säule 151 des Anlagenrahmens 150 befestigt und zwar oberhalb des Vorlagebehälters 410 und oberhalb des Zuführtrichters 440 des Beschichters 400, wobei die Ausgabeöffnung 312 des Mischers 310 in der Beschickungsposition des Beschichters 400 über dem Zuführtrichter 440 angeordnet ist, um den Vorlagebehälter 410 über den Zuführtrichter 440 mit frisch zubereitetem Baumaterial zu beschicken.

Die Anlage 100 weist ferner eine nicht gezeigte zentrale Steuereinrichtung auf, mit der der Prozessablauf und die einzelnen Komponenten wie Mischvorrichtung 300, Beschichter 400, Druckvorrichtung 500, Beschichter-Reinigungsstation 600 und Druckkopf-Reinigungsstation 700 gesteuert werden können. Im Sinne dieser Anmeldung soll dabei von dem Begriff "Steuern" auch ein "Regeln" umfasst sein, d.h. die Steuereinrichtung kann auch eine Regelungseinrichtung sein.

### Baubox 200

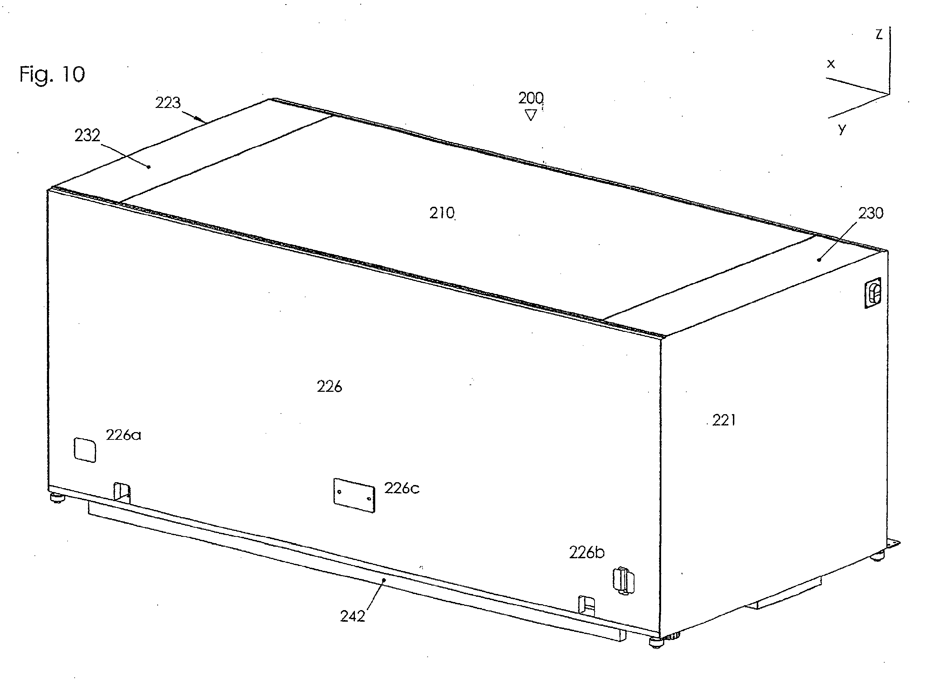

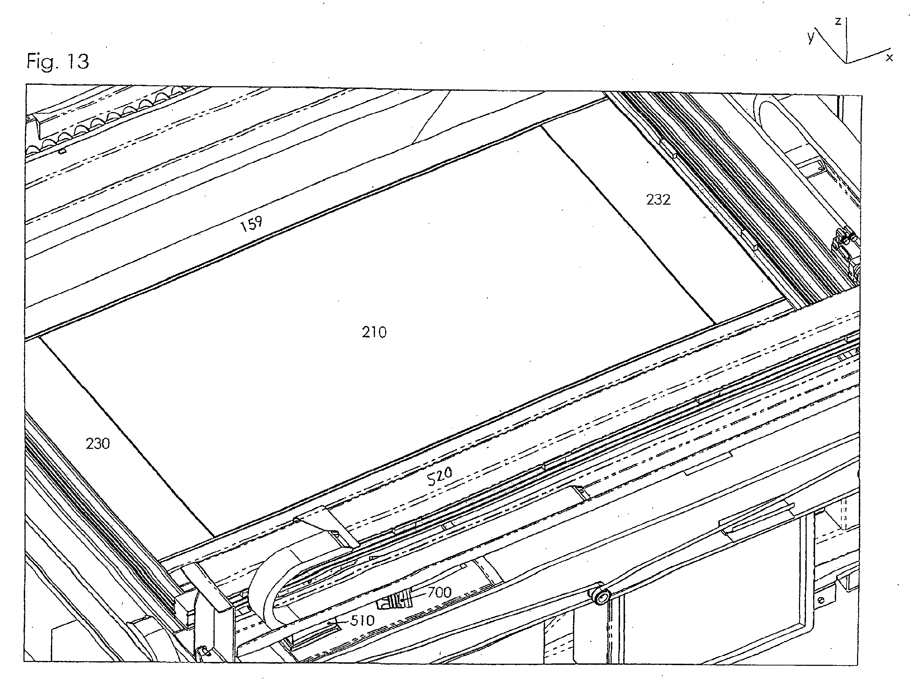

Im Folgenden werden unter Bezugnahme auf die Figuren 7 bis 15 die Baubox 200 (welche alternativ auch als Baubehälter 200 bezeichnet wird) sowie das für die Baubox 200 vorgesehene Schienensystem 140 (insbesondere Figuren 7 bis 9), das Bauboxfixierungssystem zum Ausrichten und Fixieren der Baubox 200 an dem Anlagenrahmen 150 (Figuren 10 bis 12) sowie die Baufeldabdeckung (Figuren 13 bis 15) im Detail beschrieben. Wie in **Figur 7** gezeigt ist, weist die Baubox vier Bauboxwände/Seitenwände 221, 223, 224 und 226 auf, welche sich jeweils in vertikaler Richtung erstrecken. Die vordere Seitenwand/Stirnwand 221 dient als Verkleidungswand und bildet mit einer vertikalen Vorderwand 220 der Baubox einen Zwischenraum zur Aufnahme des Fahrantriebs 250 und des Hubantriebs 260 aus (siehe Figur 8). Auf die gleiche Weise dient die hintere Seitenwand/Stirnwand 223 als Verkleidungswand und bildet mit einer vertikalen Rückwand (nicht gezeigt) der Baubox einen zweiten Zwischenraum zur Aufnahme eines weiteren Hubantriebs (nicht gezeigt) aus. Die beiden Seitenwände 224 und 226 bilden zusammen mit der Vorderwand 220 und der Rückwand einen nach oben und unten offenen Behälter bzw. Begrenzungsrahmen aus, der im Längsschnitt rechteckig ausgebildet ist, d.h. der Begrenzungsrahmen hat zwei kurze Seitenwände sowie zwei lange Seitenwände.

Ferner weist die Baubox 200 eine erste Baufeldplatte/ Abdeckungsplatte 232 und eine zweite Baufeldplatte/ Abdeckungsplatte 230 auf, welche sich jeweils in horizontaler Richtung zwischen und senkrecht zu den beiden langen Seitenwänden 224 und 226 erstrecken und den ersten bzw. zweiten Zwischenraum nach oben abdecken. Wenn sich die Baubox 200 in der Bauposition befindet, bilden die beiden Platten 230, 232 einen der Teil der Baufeldabdeckung aus (siehe z.B. Figur 13).

Ferner weist die Baubox 200 eine Bauplattform 210 auf, die einen in vertikaler Richtung höhenverstellbaren Behälterboden ausbildet, wozu die Bauplattformunterseite auf einem Bauplattform-Träger (nicht gezeigt), z.B. einem Tragarm, abgestützt ist, der über einen Hubantrieb in vertikaler Richtung verfahrbar ist. Die Bauplattformoberseite bildet die Arbeitsfläche, auf der das herzustellende Objekt aufgebaut wird. Während des Bauprozesses, d.h. wenn sich die Baubox 200 in der Bauposition befindet, wird die Bewegung der Bauplattform durch die zentrale Steuereinrichtung gesteuert. Ferner kann die Position der Bauplattform 210 über einen an der vorderen Stirnwand 220 angebrachten Druckknopf 212 manuell eingestellt werden.

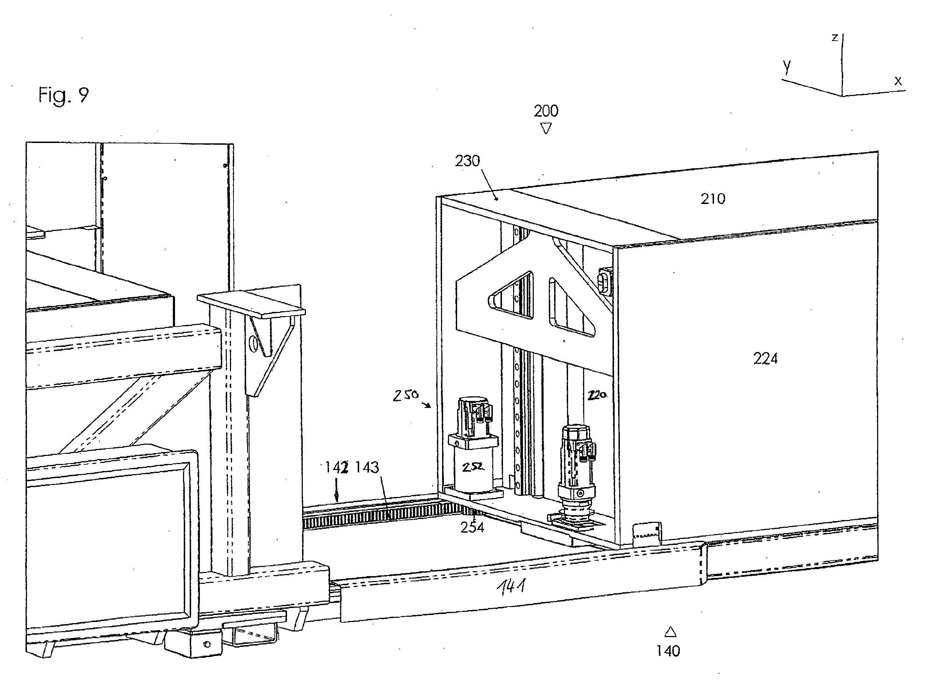

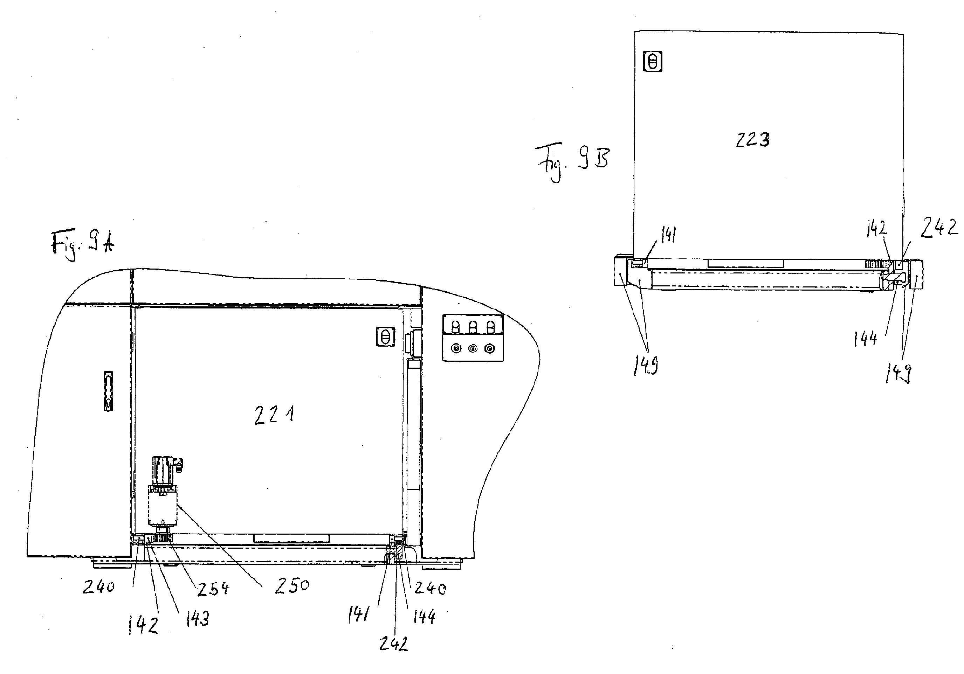

An der Unterseite der Baubox 200 sind eine Mehrzahl von seitlichen Führungsrollen 240 angebracht (gemäß dieser Ausführungsform vier), welche mit dem Schienensystem 140 zusammenwirken, um eine Zentrierung/Ausrichtung der Baubox 200 in/entlang der y-Richtung, d.h. in Baubox-Querrichtung, zu ermöglichen. Die Führungsrollen 240 können z.B. an den Innenseiten oder Außenseiten der Schienen 141, 142 abrollen. Ferner ist an der Unterseite bzw. unteren Stirnfläche/Randfläche der ersten Seitenwand 224 sowie an der Unterseite der zweiten Seitenwand 226 jeweils eine leistenförmige Gleit- oder Rollkufe 242 angebracht, wobei die beiden Kufen 242 auf an den Innenseiten oder Außenseiten der Schienen 141, 142 angebrachten Rollen 144 stehen können, welche in Figur 7 gestrichelt dargestellt sind. Ferner ist an der Bauboxunterseite ein Zahnrad 254 angebracht, das Teil des in Figur 8 gezeigten bauboxseitigen Fahrantriebs 250 ist und das in die in Figur 9 gezeigte Zahnstange 143 des Schienensystems 140 eingreift. Bei einer Drehbewegung des Zahnrads 254 wird die Baubox 200 daher in x-Richtung über die Rollen 144 hinweg bewegt.

**Figur 8** zeigt die Baubox 200 ohne die vordere Stirnwand 221. Wie aus Figur 8 ersichtlich ist, weist die Baubox 200 einen in die Baubox integrierten Baubox-Fahrantrieb 250 sowie einen in die Baubox 200 integrierten Bauplattform-Hubantrieb 260 auf. In der gezeigten Ausführungsform sind der Baubox-Fahrantrieb 250 und der Bauplattform-Hubantrieb 260 an der vorderen Stirnseite der Baubox 200 angebracht (zwischen der vorderen Stirnwand 221 und der parallel zu dieser angeordneten Vorderwand 220). Dies hat den Vorteil, dass die Schleppkette/Schleppkabel 270 für die elektrischen Anschlüsse (vgl. Figuren 2 und 3) kürzer ausgeführt werden kann und einfacher zu führen ist, da die vordere Stirnseite 220 in der Entpackungsposition der Baubox dem Gehäuse 110 der Anlage zugewandt ist. Die beiden Antriebe 250, 260 können aber auch an einer anderen Stelle positioniert sein, z.B. jeweils an der hinteren Stirnseite. Alternativ können die beiden Antriebe 250, 260 auch auf die vordere und die hintere Stirnseite verteilt sein. Gemäß einer weiteren Ausführungsform der Erfindung sind wie in Figur 8 gezeigt an der vorderen Stirnseite ein Fahrantrieb 250 sowie ein Hubantrieb 260 vorgesehen, wobei an der hinteren Stirnseite ein zusätzlicher Hubantrieb (nicht gezeigt) bereitgestellt ist, der mit dem Hubantrieb 260 synchronisiert ist. In einer weiteren Ausführungsform kann zudem auch ein zusätzlicher Fahrantrieb an der hinteren Stirnseite vorgesehen sein.

Mit dem Baubox-Fahrantrieb 250 kann die Baubox 200 zwischen der Bauposition und der Entpackungsposition im oben erwähnten einfachen Shuttle-Betrieb hin- und hergefahren werden (in x-Achsenrichtung, d.h. in Längsrichtung der Baubox). Aufgrund des eigenen Fahrantriebs 250 kann eine separate Vorrichtung zum Ein- und Ausfahren der Baubox 200 in das bzw. aus dem Gehäuse 110 entfallen. Zudem kann die Aufbauhöhe reduziert werden. Der Baubox-Fahrantrieb 250 weist einen Fahrantriebs-Motor 252 auf, der Bestandteil der Baubox 200 ist. Die Stromversorgung des Fahrantrieb-Motors 252 erfolgt über eine Schleppkette 270 (vgl. Figuren 2 und 3). Der Motor 252 treibt das bereits oben beschriebene Zahnrad 254 an, das in die Zahnstange 143 eingreift. Der Fahrantrieb 250 ist mit der zentralen Steuereinrichtung verbunden (ebenfalls über die Schleppkette 270), so dass das Verfahren der Baubox 200 automatisiert erfolgen kann.

Der Bauplattform-Hubantrieb 260 weist einen Hubantrieb-Motor 262 auf, der Bestandteil der Baubox 200 ist. Der Bauplattform-Hubantrieb 260 weist ferner eine drehbar angeordnete Schraubspindel 264 und eine Spindelmutter (nicht gezeigt) auf, welche durch Drehung der Spindel 264 entlang der Spindel nach oben bzw. unten bewegbar ist. Die Spindelmutter ist dabei mit dem Träger (nicht gezeigt) verbunden, der die Bauplattform 200 an ihrer Unterseite abstützt. Hierzu ist eine Ausnehmung in der Vorderwand 221 vorgesehen, durch die der Tragarm greift, um die Bauplattform 210 von unten abzustützen. Somit kann durch eine Drehung der Spindel die Bauplattform 210 abgesenkt bzw. angehoben werden. Ein solcher Spindeltrieb-Mechanismus ist z.B. in der DE 20 2006 010 327 U1 beschrieben, auf die insofern verwiesen wird als der Spindeltrieb, umfassend den Motor, die Spindel, die Spindelmutter und der Tragarm, betroffen ist. Jedoch ist die Baubox 200 anders als der in der DE 20 2006 010 327 U1 beschriebene Baubehälter nicht als Wechselbehälter ausgeführt, sondern vielmehr fester Bestandteil der Anlage. Die Abdichtung der Ausnehmung in der Vorderwand 221, durch die der Träger greift, kann zum Beispiel mit einem Blech erfolgen, das nach der Art eines Rollos funktioniert und sich beim Absenken der Bauplattform 210 auf die Innenseite der Vorderwand 221 anlegt, um die Tragarm-Ausnehmung zu überdecken/abzudichten. Eine solche Abdichtung ist z.B. in der DE 100 47 615 beschrieben (vgl. dort die Figuren 2 und 3), auf die insofern Bezug genommen wird. Die Stromversorgung des Motors 262 erfolgt wie die Stromversorgung des Motors 252 über die Schleppkette 270 (vgl. Figuren 2 und 3). Zudem ist auch der Bauplattform-Hubantrieb 260 mit der zentralen Steuereinrichtung verbunden (ebenfalls über die Schleppkette 270), so dass das Absenken der Bauplattform 210 während des Bauprozesses von der Steuereinrichtung gesteuert werden kann. Das Anheben der Bauplattform 210 in der Entpackungsposition der Baubox 200 kann entweder ebenfalls durch die zentrale Steuereinrichtung gesteuert werden oder manuell gesteuert werden durch Betätigen des Druckknopfes 212. Der in die Baubox 200 integrierte Hubantrieb 260 kann somit sowohl beim Bauprozess als auch beim Auspacken des fertig gestellten Formkörpers verwendet werden, so dass ein separater Motor zum Auspacken eingespart werden kann. Ferner muss die Bauplattform nach Beendigung eines Baujobs vor dem Herausfahren aus dem Gehäuse in die Entpackungsposition nicht bis zum unteren Totpunkt abgesenkt werden, wie dies bei Anlagen der Fall ist, bei denen der Hubantrieb an dem Anlagenrahmen montiert ist, sondern kann unmittelbar nach Fertigstellung des Formkörpers mit dem bauboxseitigen Fahrantrieb 250 in die Entpackungsposition gefahren werden, in der die Bauplattform 210 über den bauboxseitigen Hubantrieb 260 angehoben wird. Somit kann durch die Anordnung von Hubantrieb 260 und Fahrantrieb 250 an der Baubox 200 auch eine Zeitersparnis erzielt werden.

**Figur 9** zeigt die Baubox 200 auf dem für die Baubox 200 vorgesehenen Schienensystem 140.

Wie auch aus den Figuren 9A und 9B ersichtlich ist, hat die Baubox einen eigenen Baubox-Fahrantrieb 250, der hier in dem zwischen der vorderen Verkleidungswand 221 und der hier nicht sichtbaren Vorderwand 220 gebildeten Zwischenraum aufgenommen ist. Der Fahrantrieb 250 kann aber auch an anderer Stelle, z.B. in dem gegenüberliegenden, an der Hinterseite der Baubox 200 ausgebildeten Zwischenraum angeordnet sein. Der Bauplattform-Hubantrieb 260 ist in den Figuren 9A und 9B nicht gezeigt, kann jedoch z.B. zusammen mit dem Baubox-Fahrantrieb 250 in dem vorderen Zwischenraum angeordnet sein.

Der Fahrantrieb 250 ist mit einem hier liegend angeordneten, an der Bauboxunterseite angebrachten Zahnrad 254 gekuppelt, das von einem in die Baubox 200 integrierten Baubox-Fahrmotor 252 (z.B. ein Elektromotor) des Fahrantriebs 250 antreibbar ist. Das an der Unterseite der Baubox 200 befestigte Zahnrad 254 wirkt mit einer Zahnstange 143 (hier eine Stange, deren innere bzw. innenliegende Seitenfläche als Zahnfläche oder Verzahnung ausgebildet ist) zusammen, wozu das Zahnrad 254 in die Zahnstange 143 eingreift und auf dieser abrollt, wenn es (das Zahnrad/Zahnritzel) von dem Fahrmotor 252 angetrieben wird, so dass die Baubox 200 entlang der Zahnstange 143 verfahrbar ist.

Die Baubox 200 hat ferner mehrere seitliche Führungsrollen 240, hier insgesamt vier, die z.B. an der Unterseite der Baubox 200 angebracht sein können (z.B. in Baubox-Längsrichtung vor und hinter den unten beschriebenen Kufen 242). Die vier Führungsrollen 240 haben z.B. jeweils eine vertikale Rollachse. Die Führungsrollen 240 wirken mit zwei Führungsschienen (rechte Führungsschiene 141 und linke Führungsschiene 142) zusammen, an deren äußeren Seitenflächen sie abrollen können (siehe Figuren 9A und 9B).

Die Baubox 200 hat ferner an ihrer Unterseite zwei in Baubox-Längsrichtung verlaufende Baubox-Schienen oder -Leisten oder -Kufen 242, mit denen die Baubox 200 auf Stützrollen 144 rollen kann (siehe Figur 9B). Die Stützrollen 144 sind hier an den äußeren Seitenflächen der Führungsschienen 141, 142 angebracht (unterhalb der Abrollfläche für die Führungsrollen 240), wodurch sog. Abrollschienen 141, 142 gebildet werden. D.h., die Stützrollen 144 sind von außen an den Führungsstangen/Führungsschienen 141, 142 befestigt, um die Baubox 200 an den bzw. über die Schienen/Kufen 242 abzustützen.

Die oben beschriebene Zahnstange 143 kann z.B. an der inneren Seitenfläche von einer der Führungsschienen 141, 142 angebracht oder ausgebildet sein. In den Figuren 9A und 9B ist die Zahnstange 143 an der inneren Seitenfläche der linken Führungsschiene 142 mit nach innen gerichteten Zähnen ausgebildet. Das von dem Fahrmotor 252 angetriebene Zahnritzel 254 greift von innen in die Zahnfläche der Zahnstange 143 ein.

Die beiden Führungsschienen 141, 142, welche zusammen mit den Stützrollen 144 auch die beiden Abrollschienen bilden, sowie die Zahnstange 143 bilden zusammen ein Schienensystem 140 im Sinne der vorliegenden Erfindung. Die Führungsschienen 141, 142 können mit Verkleidungsblechen 149 versehen sein.

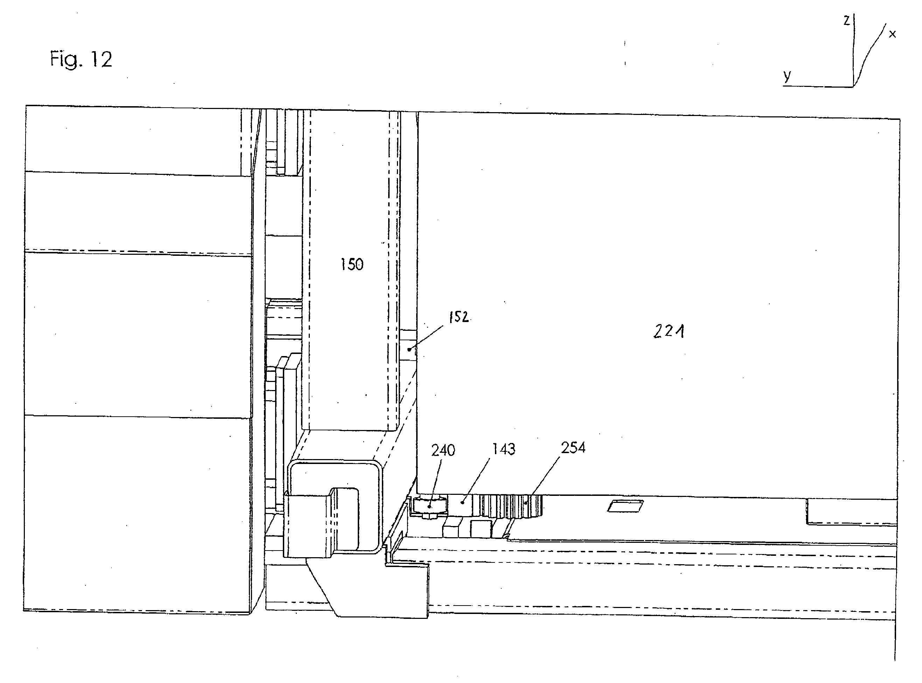

Alternativ kann das Schienensystem 140 z.B. eine erste Schiene 141 und eine zweite Schiene 142 aufweisen, welche parallel zueinander angeordnet sind. Ferner kann das Schienensystem 140 eine Zahnstange 143 aufweisen, die z.B. parallel zu und nahe der zweiten Schiene 142 angeordnet ist. Die Zähne der Zahnstange 143 können der ersten Schiene 141 zugewandt sein. Das an der Bauboxunterseite angebrachte Zahnrad 254 greift in die Zähne der Zahnstange 143 ein, um an der Zahnstange 143 abzurollen, wenn das Zahnrad über den Motor 252 angetrieben wird. An der der zweiten Schiene 142 zugewandten Seite der Zahnstange 143 rollen die beiden Führungsrollen 240 ab, die auf der Seite der zweiten Seitenwand 226 angebracht sind (vgl. Fig. 12). Zusätzlich oder alternativ können die beiden Führungsrollen 240 aber auch an der Innenseite der zweiten Schiene 142 abrollen. Die beiden Führungsrollen 240, die auf der Seite der ersten Seitenwand 226 angebracht sind, rollen an der Innenseite der ersten Schiene 141 ab.

Die Baubox ist somit durch die Führungsrollen 240 entlang/in der y-Richtung zentriert. Zur Reduzierung der Reibung, die bei einem Verfahren der Baubox 200 auftritt, sind an den einander zugewandten Innenflächen oder Außenflächen der Schienen 141, 142 Rollen 144 angebracht, über die die Baubox 200 mit den Kufen 242 rollen kann.

Für den Bauprozess ist es wichtig, dass sich die Baubox 200 exakt in der vorbestimmten Bauposition befindet, wozu die Baubox 200 in allen Achsrichtungen zentriert und fixiert sein sollte. Die Zentrierung und Fixierung in y-Richtung erfolgt über das oben beschriebene Führungsrollensystem. In z-Richtung wird die Baubox durch ihr Eigengewicht ausreichend fixiert. Somit ist nach dem Einfahren der Baubox 200 in das Gehäuse 110 und in die Bauposition lediglich noch eine Zentrierung und Fixierung in x-Richtung erforderlich, welche durch das in den Figuren 10 bis 13 gezeigte Bauboxfixierungssystem erfolgt.

Wie in **Figur 10** gezeigt ist, weist die Baubox 200 an einer der beiden Seitenwände (gemäß dieser Ausführungsform an der zweiten Seitenwand 226) ein Anschlagplättchen 226a, eine Ausricht-Vertiefung 226b und ein Sensorzielobjekt 226c auf. Das Anschlagplättchen 226a ist in Längsrichtung hinten angeordnet, d.h. nahe der hinteren Stirnwand 223, und die Vertiefung 226b ist vorne (nahe der vorderen Stirnwand 221) angeordnet. Die Position des Anschlagplättchens 226a und die Position der Vertiefung 226b können aber auch vertauscht sein. In z-Richtung sind das Anschlagplättchen 226a und die Vertiefung 226b in dem unteren Bereich der Seitenwand angeordnet. Die Ausricht-Vertiefung 226b ist konusförmig ausgebildet. Das Sensorzielobjekt 226c ist in Längsrichtung im Wesentlichen mittig angeordnet.

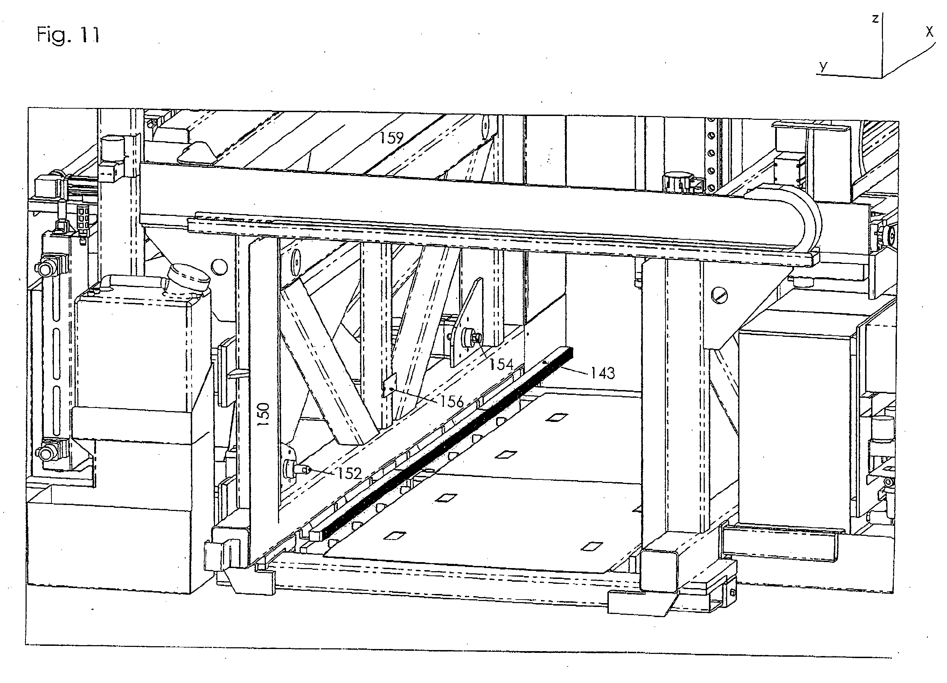

Wie in **Figur 11** gezeigt ist, sind an dem Anlagenrahmen 150 ein erstes Anpresselement/Ausricht-Element 152, welches mit der Ausricht-Vertiefung 226b zusammenwirkt, ein zweites Anpresselement/Fixierelement 154, welches mit dem Anschlagplättchen 226a zusammenwirkt, und ein Sensor 156 angebracht, welcher mit dem Sensorzielobjekt 226c zusammenwirkt. Das erstes Anpresselement 152 und das zweite Anpresselement 154 sind jeweils in y-Richtung bewegbar/verfahrbar. Die Bewegung der beiden Anpresselemente 152 und 154 wird über die zentrale Steuereinrichtung gesteuert. Das erste Anpresselement 152 weist einen Dorn auf, der entsprechend der Form der sich verjüngenden Vertiefung 226b geformt ist. Insbesondere ist der Endabschnitt des ersten Anpresselements 152 konusförmig ausgebildet. Das zweite Anpresselement 154 weist einen Bolzen mit einem flach ausgebildeten Endabschnitt auf.

²Wenn die Baubox 220 in das Gehäuse 110 hinein gefahren ist, detektiert der Sensor 156, ob das Sensorzielobjekt 226c in einer vorbestimmten Position ist. Wenn das Sensorzielobjekt 226c in der vorbestimmten Position ist, gibt der Sensor ein "Baubox-in-Position-Signal" an die zentrale Steuereinrichtung aus. Die zentrale Steuereinrichtung veranlasst daraufhin ein Ausfahren der beiden Anpresselemente 152, 154, d.h. eine Bewegung in y-Richtung zu der Baubox 200 hin. Dadurch wird das erste Anpresselement 152 mit dem Konus in die Vertiefung 226c (siehe **Figur 12**) und das zweite Anpresselement 154 mit dem flachen Endabschnitt gegen das Anschlagplättchen 226a gedrückt, wodurch eine zentrierung und Fixierung der Baubox 200 in/entlang der x-Richtung und an dem Anlagenrahmen erfolgt. Sodann kann der Bauprozess beginnen.

Da die Zentrierung in y-Richtung bereits durch die Führungsrollen 240 erfolgt, ist es ausreichend, das Bauboxfixierungssystem einseitig auszubilden, d.h. es ist ausreichend, wenn nur eine der beiden Seitenwände mit der Vertiefung 226b und dem Anschlagplättchen 226a versehen ist.

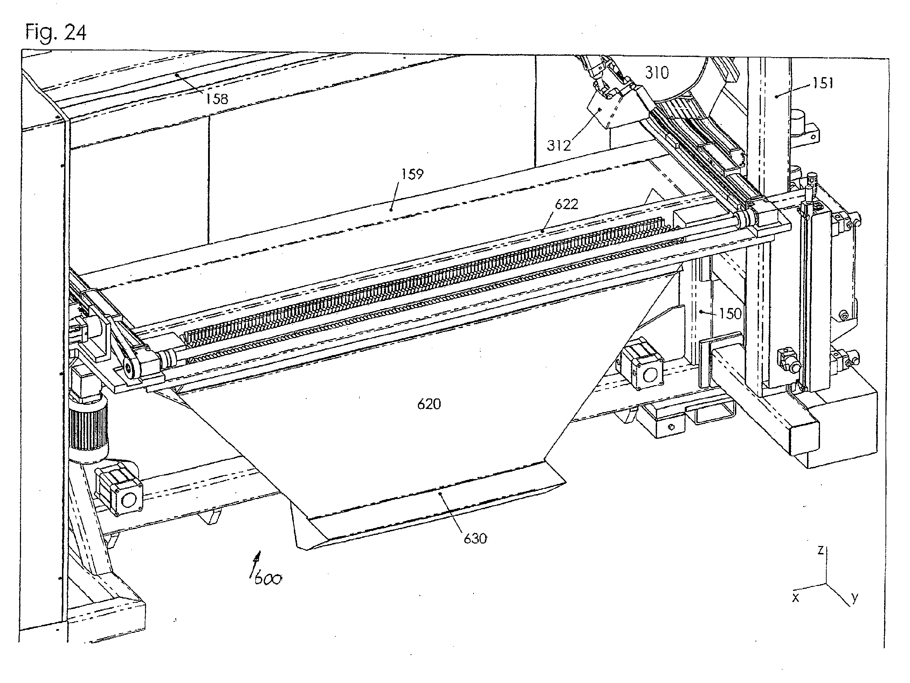

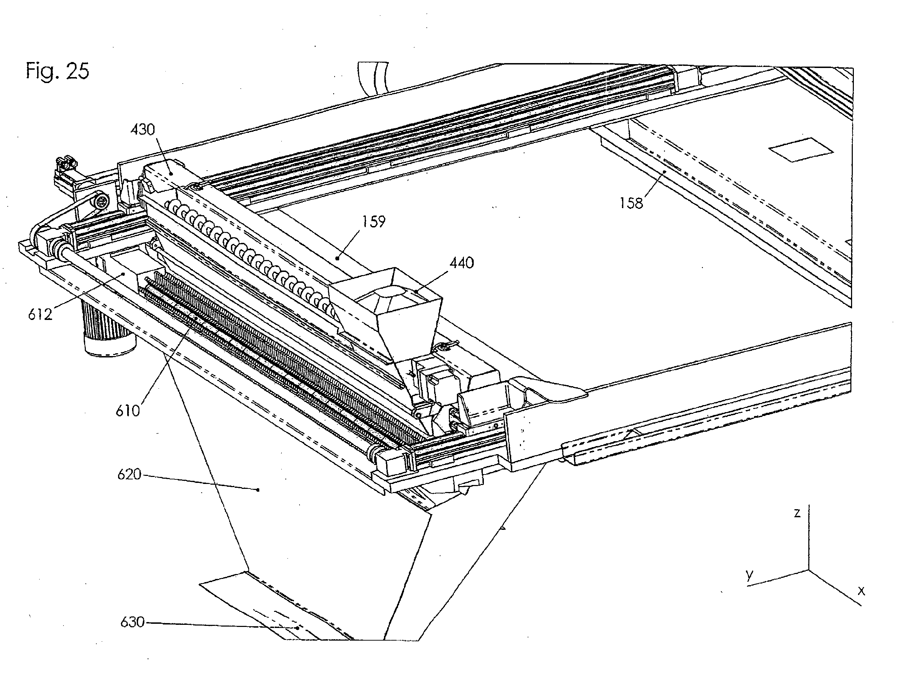

In **Figur 13** ist die Baubox 200 in ihrer Bauposition fixiert. Wie aus Figur 13 ersichtlich ist, wird die die Bauplattform 210 bzw. das Baufeld umgebende Baufeldabdeckung bzw. Baufeldumrahmung zum einen durch die beiden an der Baubox 200 angebrachten horizontalen Abdeckungsplatten 230 und 232 und zum anderen durch zwei anlagenseitige horizontale Begrenzungsplatten 158 und 159 (siehe auch Figuren 24 und 25) gebildet, welche an dem Anlagenrahmen 150 befestigt sind. Die beiden bauboxseitigen Baufeldplatten 230 und 232 erstrecken sich mit ihrer jeweiligen Längsachse parallel zur y-Achse (= Baubox-Querrichtung), und die beiden stationären anlagenrahmenseitigen Baufeldplatten 158 und 159 erstrecken sich mit ihrer jeweiligen Längsachse parallel zu der x-Achse (= Baubox-Längsrichtung).

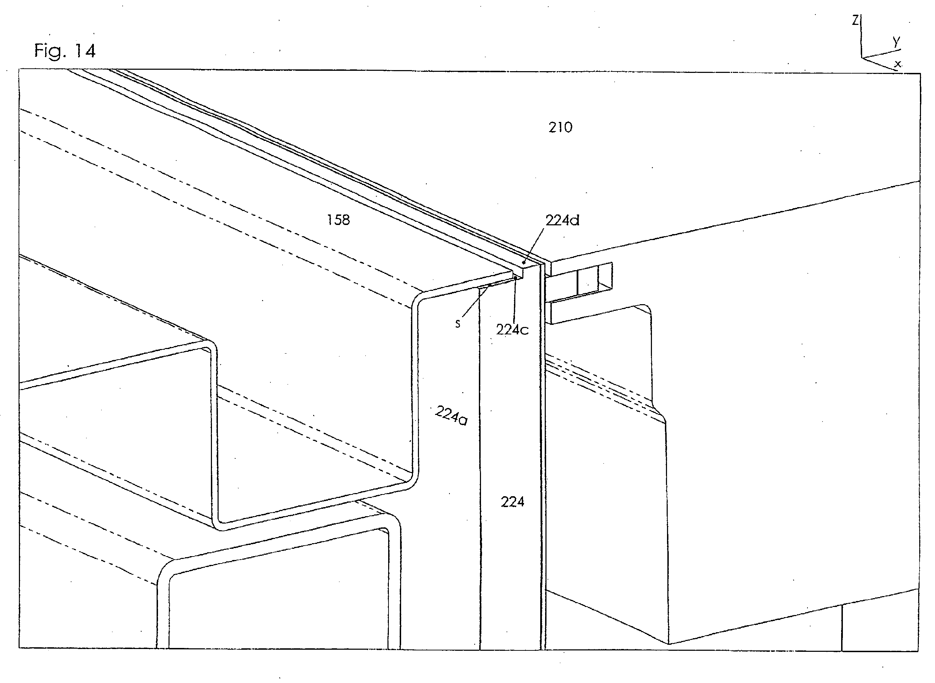

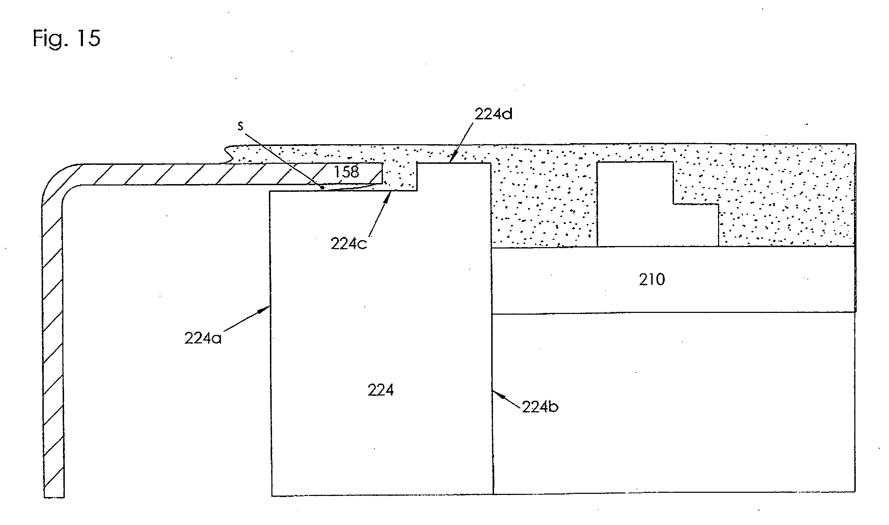

Wie aus den **Figuren 14** **und** **15** ersichtlich ist, weist die erste Seitenwand 224 an ihrer Oberseite bzw. an ihrer oberen Randfläche, welche sich in horizontaler Richtung zwischen der Außenseite 224a und der Innenseite 224b der ersten Seitenwand 224 erstreckt, eine Stufe 224d auf. Die Stufe 224d grenzt an die Innenseite 224b an und ist im Wesentlichen in derselben Horizontalebene angeordnet wie die beiden bauboxseitigen Baufeldplatten 230, 232. Ferner ist an bzw. von der Oberseite der oberen Randfläche eine horizontale Randfläche 224c ausgebildet, welche gegenüber der Stufe 224d abgesenkt ist und eine Dichtfläche ausbildet. Die horizontale Randfläche 224c grenzt an die Außenseite 224a an. Der Betrag bzw. die Höhe, um die die Dichtfläche 224c gegenüber der horizontalen Fläche der Stufe 224d und gegenüber den beiden bauboxseitigen Baufeldplatten 230, 232 abgesenkt ist, ist etwas größer als die Dicke der rahmenseitigen Baufeldplatte/Begrenzungsplatte 158, so dass ausreichend Vertikalspiel zwischen der Unterseite der rahmenseitigen Baufeldplatte 158 und der Dichtfläche 224c vorhanden ist, so dass die Baubox 200 sicher in die Bauposition gefahren werden kann. Der zwischen Dichtfläche 224c und rahmenseitiger Baufeldplatte 158 gebildete Spalt s kann z.B. eine Spalthöhe von 3 bis 20 mm haben, z.B. eine Spalthöhe von 3 bis 10 mm. Des Weiteren hat die Dichtfläche 224c eine derartige Breite, dass einerseits ausreichend Horizontalspiel zwischen der rahmenseitigen Baufeldplatte 158 und der Stufe 224d vorhanden ist, um die Baubox 200 in die Bauposition und aus dieser heraus zu verfahren, und dass andererseits eine ausreichende Baumaterial-Lauflänge bereitgestellt ist. Die Baumaterial-Lauflänge ist diejenige Länge, um die die Dichtfläche 224d von der rahmenseitigen Baufeldplatte 158 überragt wird (siehe Fig. 15), d.h. die Baumaterial-Lauflänge entspricht der Länge des Spalts, der zwischen Dichtfläche 224c und rahmenseitiger Baufeldplatte 158 gebildet ist. Die Baumaterial-Lauflänge ist derart gewählt, dass sich das Baumaterial in dem Spalt s totläuft (siehe Figur 15). Mit anderen Worten bildet sich in dem Spalt s ein Schüttkegel aus dem Baumaterial aus, wobei die Länge des Schüttkegels geringer ist als die Baumaterial-Lauflänge. Die derart geformte Dichtung zwischen Baubox 200 und rahmenseitiger Baufeldplatte 158 wird als Schüttkegeldichtung oder alternativ als Labyrinthdichtung bezeichnet.

In der gleichen Weise ist auch die zweite Seitenwand 226 mit einer Stufe versehen, um eine Schüttkegeldichtung zwischen der Baubox 200 und der rahmenseitigen Baufeldplatte 159 auszubilden.

Die Baubox 200 kann somit über den integrierten Fahrantrieb 250 entlang der x-Richtung in die Bauposition gefahren werden und mit dem obigen Bauboxfixierungssystem in der Bauposition fixiert werden, wobei unmittelbar nach der Fixierung der Baubox 200 mit dem Baujob begonnen werden kann. Weitere Schritte wie z.B. ein Anheben der Baubox 200 sind nicht erforderlich. Ferner kann die Anlagenhöhe gering gehalten werden, da die Baufeldhöhe im Wesentlichen der Bauboxhöhe entspricht.

### Mischvorrichtung 300

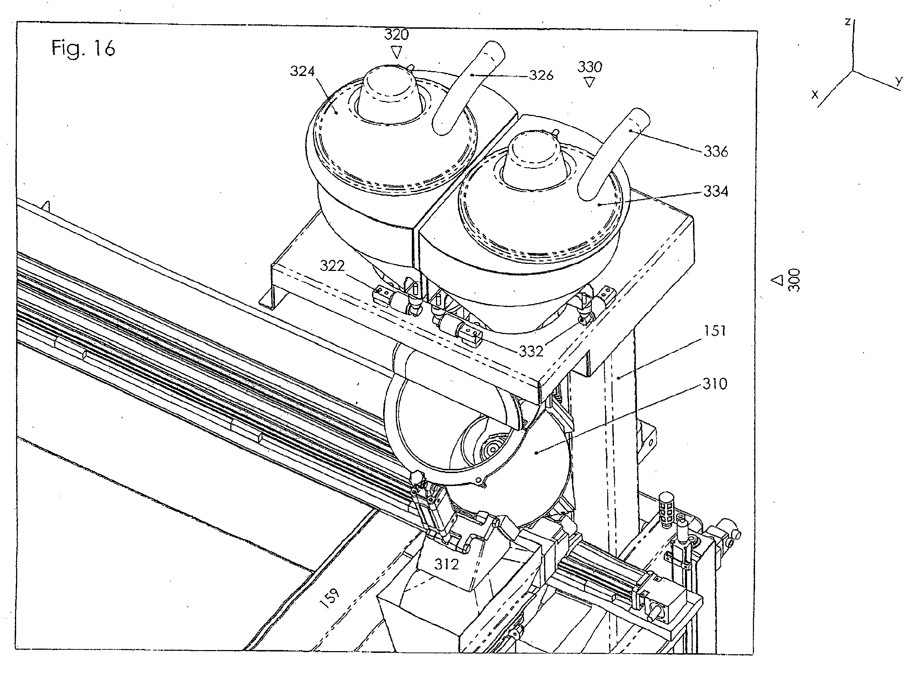

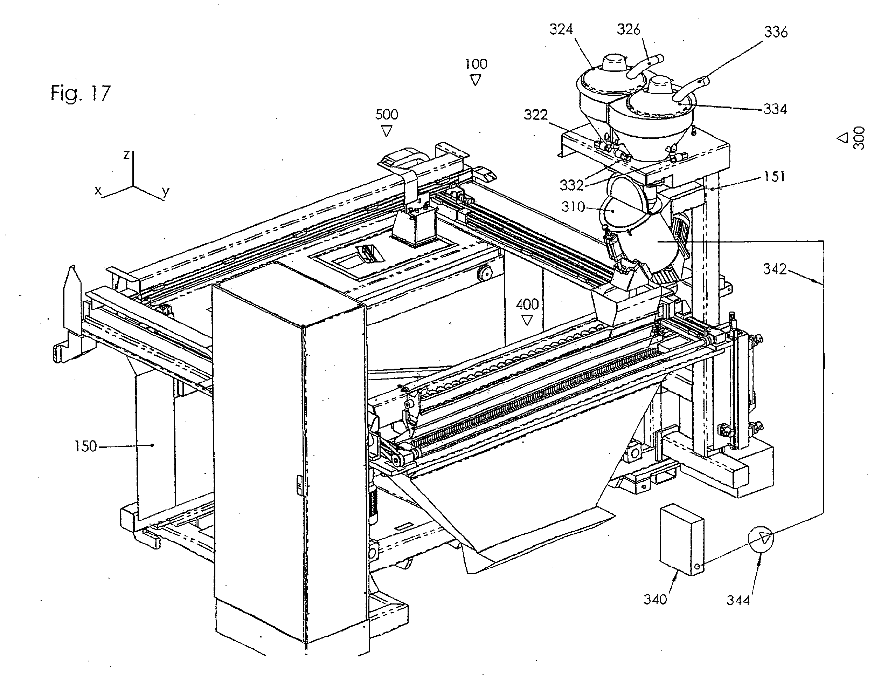

Im Folgenden wird unter Bezugnahme auf die **Figuren 16** **und** **17** eine erfindungsgemäße Mischvorrichtung 300 im Detail beschrieben.

Es wird angemerkt, dass die Mischvorrichtung 300 ebenso wie die oben beschriebene Baubox 200 nicht auf die Verwendung der hierin beschriebenen "Druckanlange" beschränkt ist, sondern vielmehr auch in anderen Rapid-Prototyping-Anlagen/Verfahren angewendet werden kann wie z.B. beim Lasersintern.

Die Mischvorrichtung oder Mischeinheit 300 weist einen Mischer 310 auf, mit dem eine homogene Baumaterial-Mischung erzeugt werden kann. Der Mischer ist oberhalb des Beschichters 400 angeordnet und in die Anlage 100 integriert. Der Mischer 310 ist hier als ein zylindrischer Behälter ausgebildet, der eine Mischkammer begrenzt, in der ein Rühr- bzw. Mischelement angeordnet ist, das über einen Mischantrieb antreibbar ist, der an die zentrale Steuereinrichtung angeschlossen ist. Die Mischkammer hat eine trichterförmige Ausgabeöffnung 312, die in der Beschickungsposition des Beschichters 400 (siehe Fig. 16) über dem Beschichter 400 angeordnet ist, so dass dem Beschichter 400 das in dem Mischer 310 frisch zubereitete Baumaterial durch die Ausgabeöffnung 312 zuführbar ist. Der Mischer ist an einer vertikalen Säule 151 des Anlagenrahmens 150 befestigt. Die Ausgabeöffnung 312 des Mischers 310 wird von einer verstellbaren Armatur verschlossen, die von der zentralen Steuereinrichtung angesteuert wird.

Die Mischeinheit 300 weist ferner einen oberhalb des Mischers 310 angeordneten ersten Dosierbehälter 320, in dem frischer Formsand aufgenommen ist, und einen oberhalb des Mischers 310 angeordneten zweiten Dosierbehälter 330 auf, in dem recycelter Formsand aufgenommen ist. Der erste Dosierbehälter 320 und der zweite Dosierbehälter 330 stehen jeweils auf drei Wiegezellen 322, 332, die das Gewicht des zugeordneten Dosierbehälters 320, 330 erfassen und die jeweils an die zentrale Steuereinrichtung angeschlossen sind. Die beiden Dosierbehälter 320, 330 stehen jeweils über eine Rohrleitung, mit dem Mischer 310 in Verbindung. In der jeweiligen Rohrleitung ist eine verstellbare Armatur (z.B. eine Klappe oder Ventil) vorgesehen, die von der zentralen Steuereinrichtung angesteuert wird. Der erste Dosierbehälter 320 und der zweite Dosierbehälter 330 können jeweils über eine nicht gezeigte Saugleitung, die an dem Anschlussstutzen 326, 336 befestigbar ist, mit Formsand befüllt werden, wozu sie jeweils eine Vorrichtung 324, 334 zum Erzeugen von Unterdruck aufweisen.

Ferner kann die Mischeinheit 300 einen oberhalb des Mischers 310 angeordneten dritten Dosierbehälter (nicht gezeigt) aufweisen, in dem ein pulverförmiger Zuschlagstoff enthalten ist, der z.B. über eine Zellenradschleuse in den Mischer 310 eingespeist wird, die mit der zentralen Steuereinrichtung in Verbindung steht.

Ferner kann dem Mischer 310 mittels einer Dosierpumpe 344 durch eine Flüssigkeitsleitung 342 eine Flüssigkeit (hier Aktivator/Härter) aus einem ersten Flüssigkeitsbehälter 340 dosiert und gesteuert zugeführt werden.

Mit der oben beschriebenen Mischeinheit kann das Baumaterial während des Baubetriebs direkt in der Anlage frisch zubereitet und dem Beschichter insbesondere unmittelbar nach der Zubereitung auf kurzem Wege zur Verfügung gestellt werden. Die einzelnen Komponenten werden in Reinform zu der oberhalb des Beschichters in der Beschickungsstation der Anlage angeordneten Mischeinheit gefördert (Feststoffe/Pulver z.B. über eine Saugleitung, Flüssigkeiten z.B. über Pumpen), wo die Baumaterial-Mischung zubereitet wird und nach ihrer Fertigstellung in den Beschichter eingespeist wird, und zwar durch Öffnen der Armatur (z.B. Klappe oder Schieber), die die Ausgabeöffnung 312 beherrscht.

### Beschichter 400

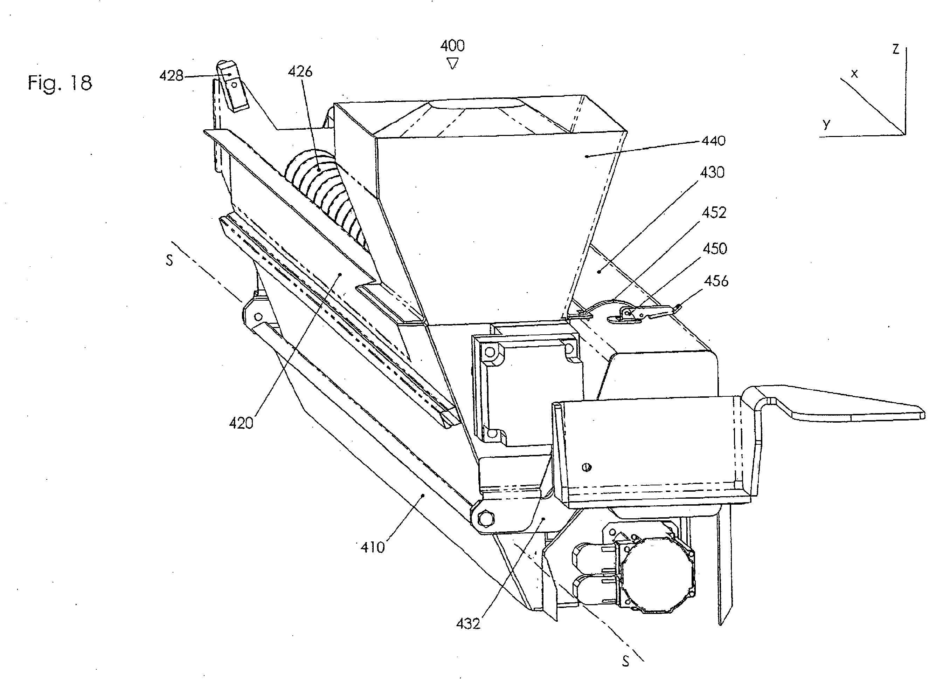

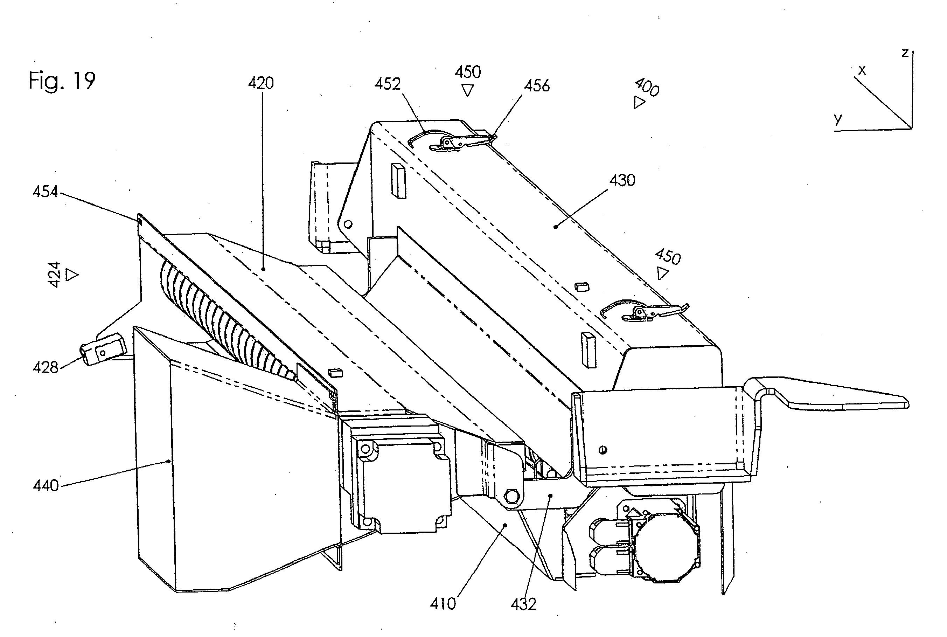

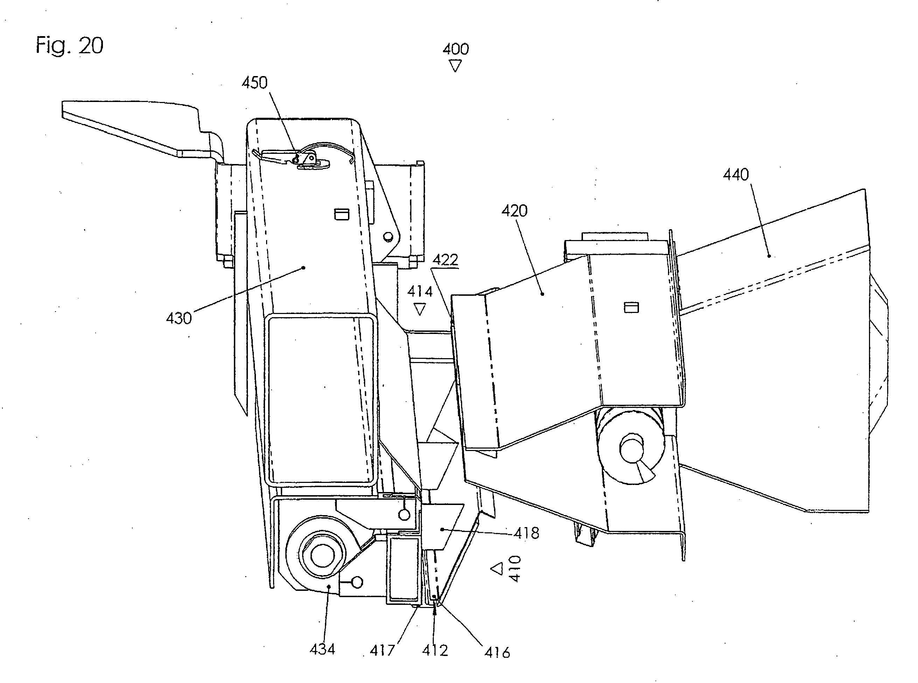

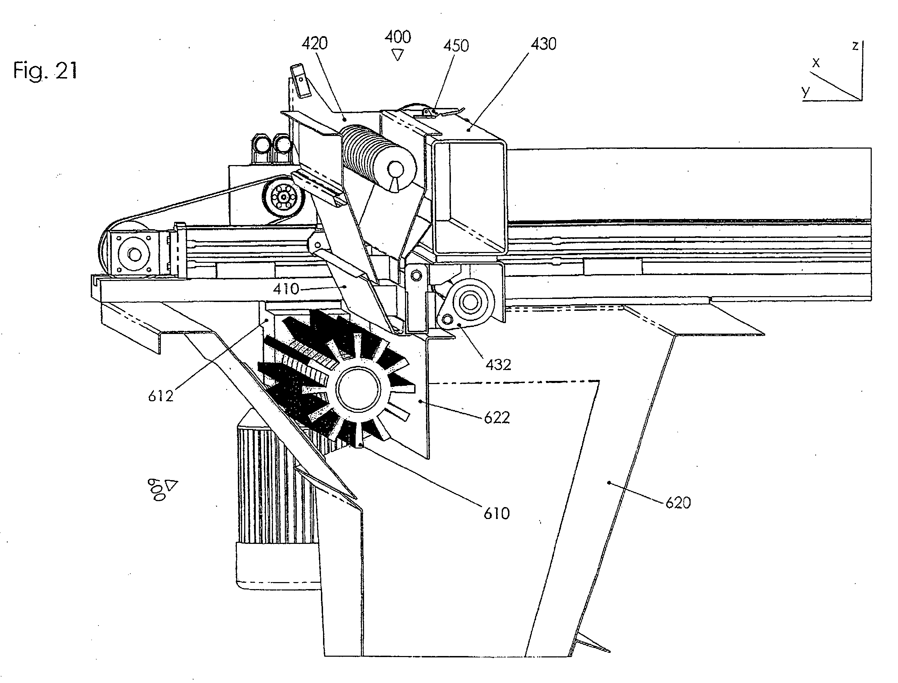

**Die** **Figuren 18 bis 21** zeigen einen horizontal verfahrbaren Beschichter 400 zum Aufbringen der Baumaterial-Schicht auf das Baufeld. Der Beschichter 400 weist einen langgestreckten im Querschnitt trichterförmigen Dosierschacht 410 auf. Der Dosierschacht 410 hat an seiner Unterseite einen Längsschlitz 412 zum Ausgeben des Baumaterials während der Bewegung des Dosierschachts 410 über das Baufeld hin. An seiner Oberseite weist der Dosierschacht 410 eine obere Zuführöffnung 414 auf, durch die dem Dosierschacht 410 Baumaterial zugeführt werden kann.

Der Beschichter 400 weist weiter einen mit dem Dosierschacht mitfahrenden Vorlagebehälter 420 auf, der oberhalb des Dosierschachts 410 angeordnet ist und eine untere Ausgabeöffnung 422 aufweist, die in die Zuführöffnung 414 des Dosierschachtes 410 eintaucht, um den Dosierschacht 410 während des Bauprozesses mit Baumaterial zu versorgen.

Der Dosierschacht 410 und der Vorlagebehälter 420 sind an einem Beschichter-Träger 430 montiert, wobei der Vorlagebehälter 420 schwenkbar mit dem Beschichter-Träger 430 verbunden ist, so dass er von dem Träger 430 und dem Dosierschacht 410 weggeschwenkt werden kann. Im Normalbetrieb ist der Beschichter-Träger 430 wie in Figur 18 gezeigt an dem Träger 430 befestigt/verriegelt und zwar mittels einer Verriegelungsvorrichtung 450, welche einen Greifarm 452 aufweist, der in dem in Figur 18 gezeigten Verriegelungszustand in eine an dem Vorlagebehälter 420 vorgesehene Eingreiföffnung 454 eingreift.

Aufgrund der verschwenkbaren Ausbildung des Vorratsbehälters 420 ist die Zugänglichkeit des Dosierschachts und des Vorratbehälters für eine Reinigung und/oder Reparatur derselben verbessert. Z.B. kann für eine Reinigung und/oder Reparatur des Beschichters 400 zunächst der Baubehälter 200 aus der Anlage 100 heraus gefahren werden, um in der Anlagenmitte Platz zu schaffen, woraufhin der Beschichter 400 in die Mitte der Anlage gefahren wird. Im Anschluss daran kann die Anlage betreten und z.B. der Vorlagebehälter 420 von dem Dosierschacht 410 und dem Träger 430 weggeschwenkt werden, um einzelne Stellen/Teile des Beschichters 400 zu reinigen/reparieren, wie z.B. die Zuführöffnung 414 des Dosierschachts 410, die Ausgabeöffnung 422 des Vorlagebehälters 420 oder die Innenwände des Vorlagebehälters 420 und des Dosierschachts 410. Insbesondere kann der Beschichter 400 aufgrund der verschwenkbaren Ausbildung des Vorlagebehälter 420 groß dimensioniert werden, wobei er dennoch von einer einzelnen Person problemlos gereinigt und/oder repariert werden kann, da keine Hebevorrichtung oder dergleichen benötigt, um den Vorlagebehälter nach oben anzuheben und von dem Dosierschacht wegzubewegen.

In dem Beschichter 400 ist eine Verteilerschnecke 426 angeordnet, die zusammen mit dem Vorlagebehälter 420 verschwenkbar ist und die das Baumaterial entlang der Vorlagebehälterlängsrichtung verteilt.

An der Oberseite des Vorlagebehälters 420 ist ein Zuführtrichter 440 angeschraubt, durch den Baumaterial aus der oberhalb des Beschichters 400 angeordneten Mischvorrichtung 300 in den Vorlagebehälter 420 hinein eingebracht werden kann.

Der Längsschlitz 412 des Dosierschachts 410 ist teilweise von einer Partikelmaterial-Umlenkplatte 416 überdeckt, die im Abstand über dem Längsschlitz 412 parallel zu diesem angeordnet ist.

### Druckkopf 500

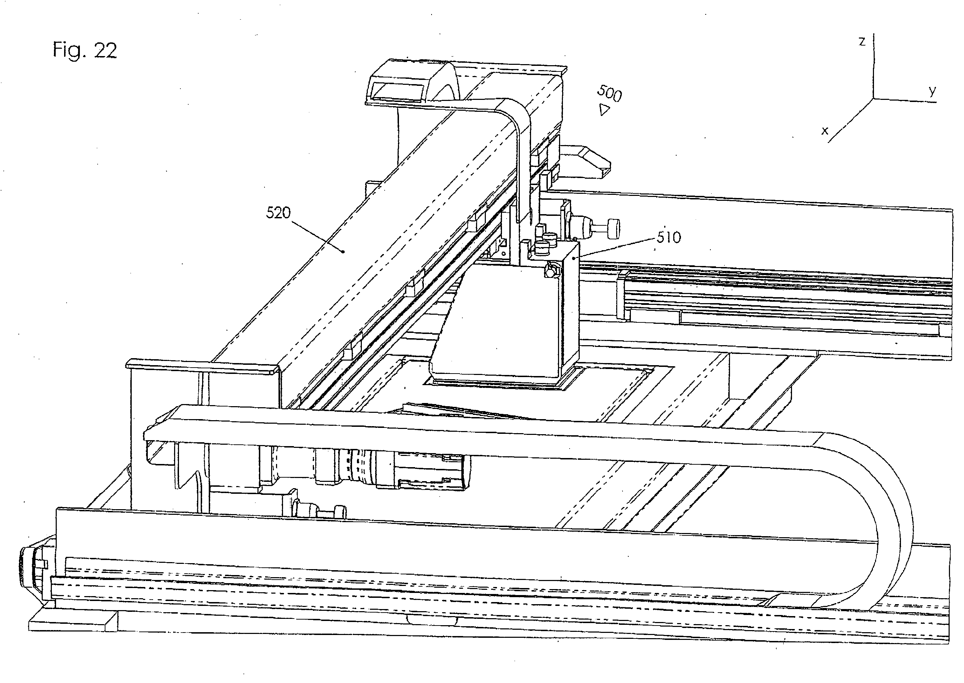

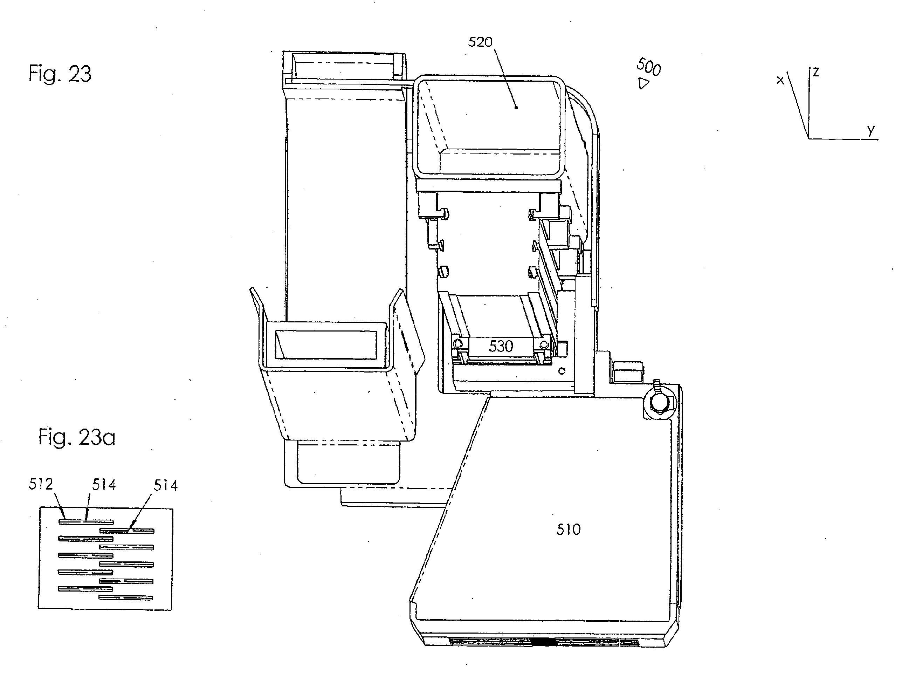

Die in den **Figuren 22** **und** **23** gezeigte Druckvorrichtung 500 weist einen langgestreckten horizontalen Druckkopf-Träger 520 auf, der entlang einer ersten Horizontalrichtung (= x-Richtung) über das Baufeld hin verfahrbar ist.

Ferner weist die Druckvorrichtung 500 einen an dem Träger 520 aufgehängten Druckkopf 510 auf, der mit einer Mehrzahl von Druckkopfdüsen 514 versehen ist zum gesteuerten Ausgeben von Harz auf die zu verfestigende Baumaterial-Schicht. Wie aus Figur 23a ersichtlich ist, hat der Druckkopf 510 eine Mehrzahl von Druckmodulen 512, welche in Druckkopf-Träger-Längsrichtung (x-Richtung) hintereinander in Reihe angeordnet sind und welche jeweils eine Vielzahl von Druckkopfdüsen 514 aufweisen, die in Druckkopf-Träger-Querrichtung (y-Richtung) hintereinander in Reihe angeordnet sind. Die Druckmodule 514 sind in zwei Druckmodul-Reihen angeordnet, die Module 512 der einen Reihe zu den Modulen 512 der anderen Reihe versetzt angeordnet sind.

Der Druckkopf 510 ist an einem Führungsschlitten 530 montiert, welcher an der Trägerunterseite des Druckkopf-Trägers 520 entlang der Druckkopf-Träger-Längsachse verfahrbar geführt ist, so dass der Druckkopf in x-Richtung verfahrbar ist und insgesamt mäanderförmig über das Baufeld verfahren werden kann. Der Druckkopf 510 ist unterhalb des Druckkopf-Trägers 520 angeordnet ist, wobei er den Träger 520 zumindest teilweise untergreift (siehe Figur 23). Der Massenschwerpunkt des Druckkopfes 510 befindet sich unter dem Druckkopf-Träger 520, bevorzugt auch unter dem Führungsschlitten 530.

Mit der oben beschriebenen Druckvorrichtung 500 kann ein von dem Druckkopf 510 erzeugtes Drehmoment um die Druckachse (= Druckkopf-Träger-Längsachse, x-Richtung) stark reduziert werden, wodurch einerseits eine Torsion des Druckkopf-Trägers 520 minimiert wird und somit die Stabilität und Schwingungsarmut des Druckkopfes 510 deutlich verbessert sind und wodurch andererseits Ausrichtfehler der Druckkopfdüsen 514 minimiert und daher die Druckqualität erhöht werden kann. Gleichzeitig werden eine gute Parallelität und ein definierter Abstand der Druckkopfunterseite zu der Oberseite der auf dem Baufeld zu bedruckenden Schicht sichergestellt. Dadurch können seinerseits die Anzahl der Druckkopfdüsen 514 bzw. Druckkopfmodule und folglich der Anlagendurchsatz deutlich erhöht werden, ohne dass hierunter die Qualität des herzustellenden Bauteils leidet. Weiter kann durch die Erhöhung der Stabilität und Schwingungsfestigkeit des Druckkopfes 510 der Abstand der Druckkopf-Unterseite zu der Oberseite der zu bedruckenden Schicht minimiert werden. Zudem können auf den Führungsschlitten 530 und dessen Führung an dem Druckkopf-Träger 520 einwirkende Kippmomente reduziert werden, so dass die Leichtgängigkeit des Führungsschlittens 530 des Druckkopfes insbesondere bei kleinen inkrementellen Bewegungen verbessert ist, was seinerseits zu einer Verbesserung der Druckqualität beiträgt. Des Weiteren kann die Anlage schmaler gebaut werden, da die Parkposition des Druckkopf-Trägers 520, in welcher der Druckkopf-Träger 520 zwischen zwei aufeinander folgenden Druckvorgängen geparkt ist, näher an das Baufeld heran gerückt werden kann, verglichen mit einer herkömmlichen Druckkopfvorrichtung, bei welcher der Druckkopf seitlich neben dem Druckkopf-Träger aufgehängt ist und daher von diesem in Horizontalrichtung wegragt.

### Beschichter-Reinigungsvorrichtung 600

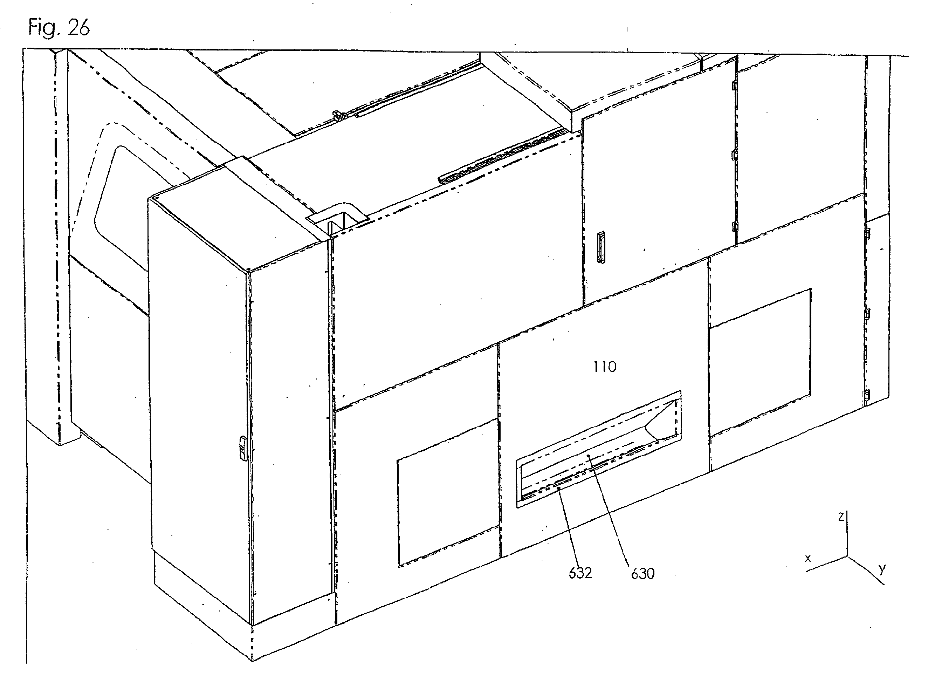

Die **Figuren 24 bis 26** zeigen eine Beschichter-Reinigungsvorrichtung 600 zum Reinigen des Dosierschachts 410 des oben beschriebenen Beschichters 400. Die Beschichter-Reinigungsvorrichtung 600 weist eine langgestreckte Bürste 610 auf, die unterhalb des Dosierschachts 410 des Beschichters 400 in einem Baumaterial-Auffangbehälter 620 aufgenommen ist. Die Länge der Bürste 610 ist mindestens so groß wie die Länge des Dosierschachts 410. Die Bürste 610 ist drehbar abgestützt und wird von einem Wischelement-Antrieb 612 drehbar angetrieben, der an die zentrale Steuereinrichtung angeschlossen ist. Die zentrale Steuereinrichtung steuert den gesamten Reinigungsprozess des Beschichters 400, d.h. das Verfahren des Beschichters 400 zu der Reinigungsvorrichtung 600 hin, die Drehbewegung der Bürste 610, sobald sich der Beschichter 400 in der Reinigungsposition befindet, und das Zurückfahren des Beschichters 400 in seine Parkposition nach der Reinigung. Die Steuereinrichtung kann eine Reinigung des Beschichters 400 z.B. nach einer vorbestimmten Anzahl von Beschichtungsfahrten oder in Abhängigkeit eines Sensorsignals veranlassen, welches anzeigt, ob ein Reinigen des Dosierschachts 410 erforderlich ist. Innerhalb des Baumaterial-Auffangbehälters 620 ist eine Umlenkplatte 622 derart angeordnet, dass Baumaterial, das mittels der Bürste 610 von dem Dosierschacht 410 abgestreift wird, von der Umlenkplatte 622 zu der Unterseite des Baumaterial-Auffangbehälters 620 abgelenkt wird. Der Baumaterial-Auffangbehälter 620 mündet in einen Speicher-Trichter für überschüssiges Baumaterial ein, und der Speicher-Trichter mündet in eine Speicher-Austrittswanne 630 ein. Die Speicher-Austrittswanne 630 steht über einen Schlitz mit einer Ausgabe-Öffnung 632 in Verbindung, welche in einer Außenwand des Anlagengehäuses 110 vorgesehen ist und durch die das in dem Speicher angesammelte Baumaterial während dem Bauprozess entnehmbar, z.B. absaugbar, ist.

### Druckkopf-Reinigungsvorrichtung 700

Das mit dem Druckkopf 510 aufzudruckende Harz ist stark viskos und kann unter gewissen Umständen an den Düsenöffnungen bzw. an der Druckkopfunterseite anhaften. Ebenso kann aufgewirbeltes Partikelmaterial an der Druckkopfunterseite anhaften. Um derartige Anhaftungen/Ablagerungen zu entfernen und die Druckkopf-Unterseite zu reinigen, ist die Druckkopf-Reinigungsvorrichtung 700 bereitgestellt.

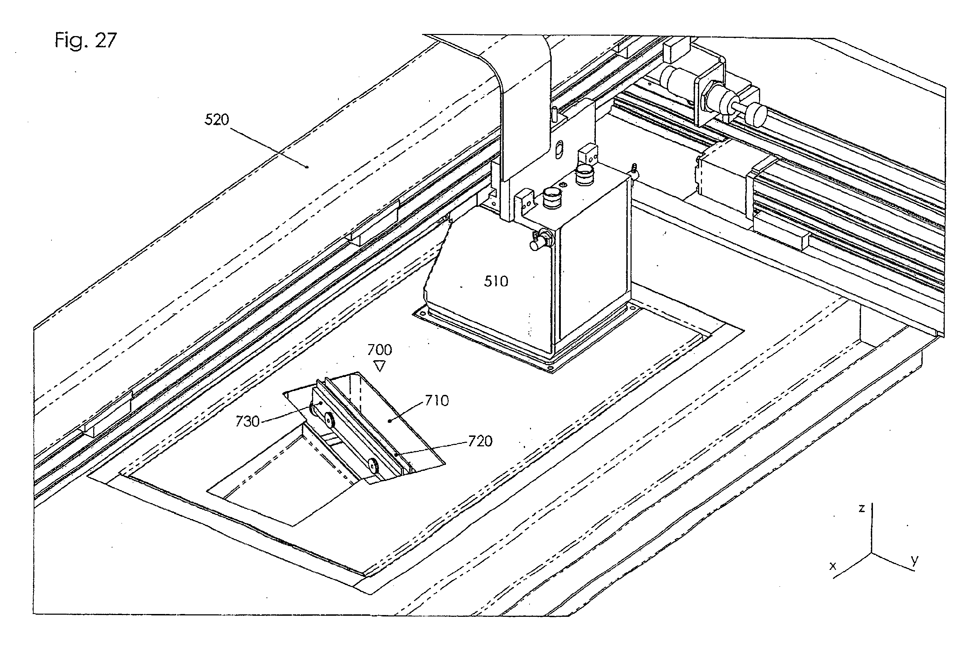

Die in den **Figuren 27 bis 29** gezeigte Reinigungsvorrichtung 700 weist einen Behälter mit einer wannenförmigen Vertiefung 710 auf, in der ein Reinigungsbad/lösungsmittel (nicht gezeigt) aufgenommen ist. Zum Zuführen und Abführen des Lösungsmittels sind an einem unteren Wannenabschnitt ein Zuführstutzen und ein Abführstutzen ausgebildet. Die Reinigungsvorrichtung 700 weist ferner zwei langgestreckte streifenförmige Wischlippen 720 auf, welche aus einem flexiblen Gummimaterial hergestellt sind. Die Wischlippen 720 erstrecken sich entlang der Wannenlängsrichtung und haben eine Länge die nur geringfügig kleiner ist als die der Wanne. Die beiden Wischlippen 720 sind von einem langgestreckten Trägerelement 730 gehalten. Das Trägerelement 730 weist einen im Querschnitt rechteckigen Halteteil auf, in dessen Oberseite zwei Längsnuten ausgebildet sind, in die die Wischlippen 720 eingesteckt sind. Zudem sind die Wischlippen 720 durch jeweils zwei Schrauben seitlich fixiert, welche in eine Seitenfläche des Halteteils eingeschraubt sind. Das Halteteil ist über drei Schrauben an einer Welle befestigt. Die Welle ist an den beiden in Längsrichtung gegenüberliegenden Wandseiten der Wanne drehbar abgestützt. Die Drehbewegung der Welle wird von der zentralen Steuervorrichtung gesteuert.

Durch die gesteuerte Drehbewegung der Welle können die beiden Wischlippen 720 somit zwischen der in Figur 2 gezeigten Druckkopf-Reinigungsposition und der in Figur 3 gezeigten Wischlippen-Regenerationspositionen hin- und hergeschwenkt werden.

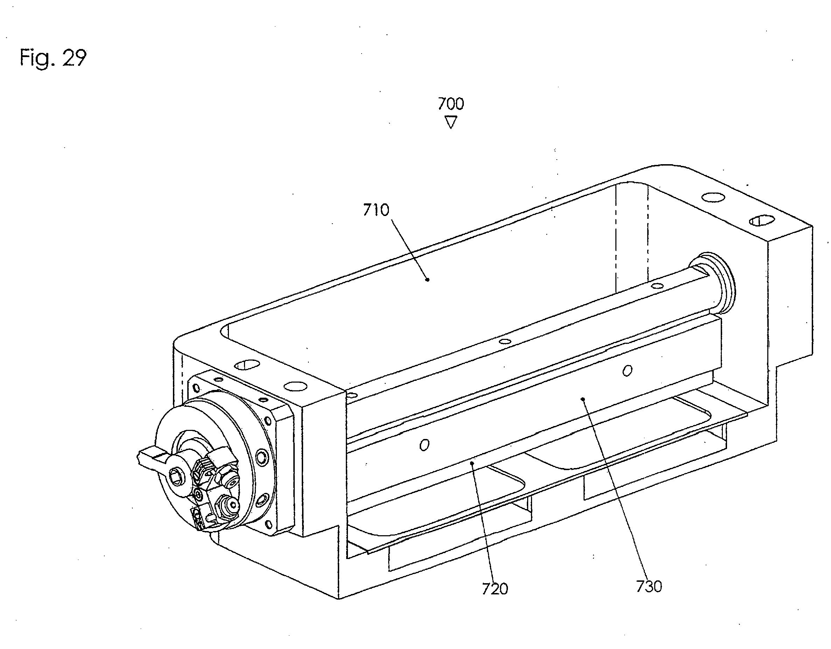

Dabei wird die Drehbewegung der Welle derart gesteuert, dass sich die beiden Wischlippen grundsätzlich in der in Figur 29 gezeigten Position befinden, in der die Wischlippen 720 in das Reinigungsbad eintauchen, so dass an den Wischlippen anhaftendes Bindemittel und Partikelmaterial in dem Reinigungsbad gelöst werden kann oder zumindest von den Wischlippen in das Bad übergeht, wodurch die Wischlippen 720 selbstständig gereinigt/regeneriert werden. Der Füllstand des Reinigungsbads in der Vertiefung 710 ist dabei bevorzugt derart gewählt, dass zumindest der aus dem Halteteil herausragende Wischlippenteil vollständig in das Reinigungsbad eintaucht.

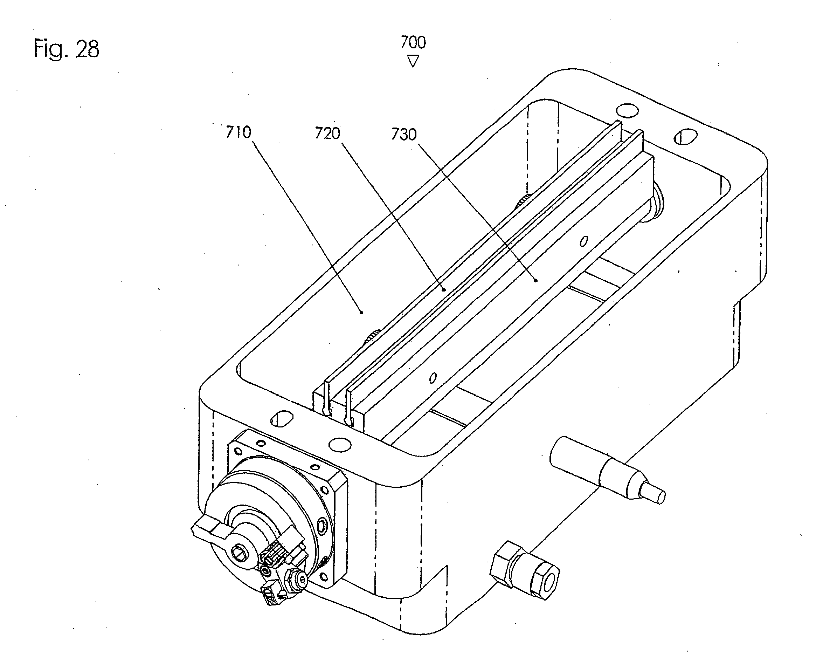

Nachdem eine vorbestimmte Anzahl von Druckfahrten absolviert wurde, veranlasst die Steuereinrichtung eine Drehbewegung der Welle um 180°, so dass die beiden Wischlippen 720 aus der in Figur 29 gezeigten Regenerationsposition in die in Figur 28 gezeigte Druckkopf-Reinigungsposition gebracht werden. Zudem steuert die Steuereinrichtung den Druckkopf 510 derart, dass dieser zu der Reinigungsvorrichtung 700 hin und (ggf. mehrmals) über diese hinweg fährt, wodurch seine Unterseite gereinigt wird.

Anschließend werden die Wischlippen 720 wieder in ihre Regenerationsposition bewegt und der gereinigte Druckkopf 510 in seine Parkposition gefahren.

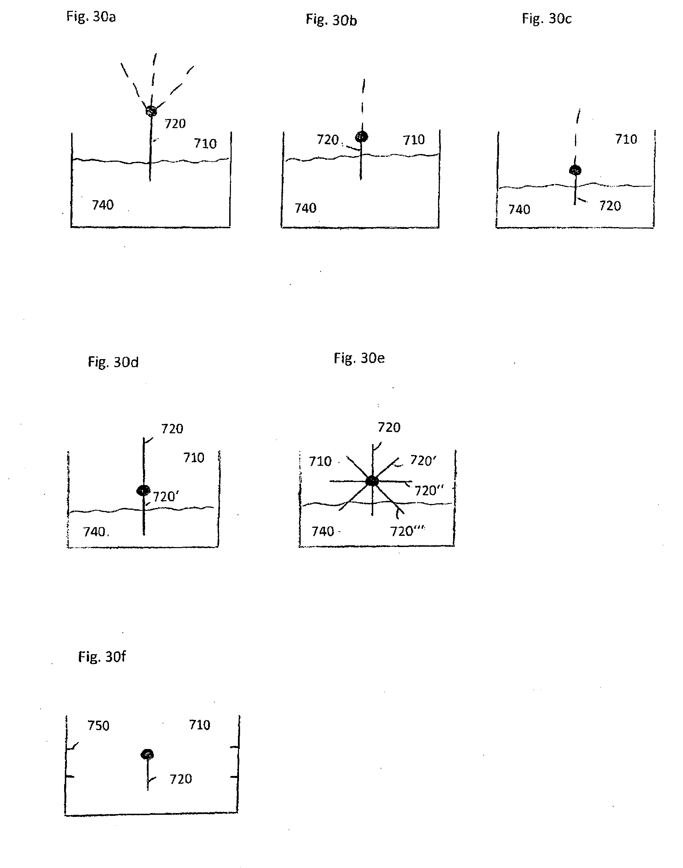

Wie in **Figur 30f** gezeigt (die Druckkopf-Reinigungsposition ist gestrichelt gezeichnet), können in der Wanne 710, insbesondere an den Seitenwänden der Wanne 710, mehrere Düsen 750 angeordnet sein, mit denen die beiden Wischlippen 720 in ihrer Regenerationsposition abgespritzt werden können. Die Düsen 710 können zusätzlich oder alternativ zu dem Reinigungsbad vorgesehen sein.

Weitere Ausführungsformen der Druckkopf-Reinigungsvorrichtung sind in den **Figuren 30a bis 30e** gezeigt, wobei die Druckkopf-Reinigungsposition gestrichelt gezeichnet ist.

## Patentansprüche

1. Anlage (100) zum schichtweisen Aufbau eines Formkörpers durch Ausbilden übereinander liegender Schichten von Baumaterial und durch selektives Verfestigen eines Teilbereichs der jeweiligen Baumaterial-Schicht vor dem Ausbilden der nächstfolgenden Schicht, aufweisend:
eine Baubox, aufweisend
eine Vorderwand (220), eine Rückwand und zwei Seitenwände (224, 226), welche zusammen einen Bauboxinnenraum begrenzen, in dem eine Bauplattform (210) aufgenommen ist, sowie
einen eigenen in die Baubox integrierten Baubox-Fahrantrieb (250) zum Verfahren der Baubox (200) zwischen einer Baubox-Bauposition, in der die Baubox (200) zum Aufbauen des Formkörpers in einem Rahmen (150) der Anlage (100) angeordnet ist, und einer zusätzlichen Baubox-Position, wobei die zusätzliche Baubox-Position der Baubox eine Baubox-Entpackungsposition ist, in der die Baubox (200) aus dem Rahmen (150) der Anlage (100) heraus gefahren ist, und
ein Schienensystem (140), entlang dem die Baubox (200) zwischen der Baubox-Bauposition und der zusätzlichen Baubox-Position mit Hilfe des Baubox-Fahrantriebs (250) verfahrbar ist.

2. Anlage (100) nach Anspruch 1, wobei der in die Baubox integrierte Baubox-Fahrantrieb (250) als ein elektrischer Fahrantrieb ausgebildet ist.

3. Anlage (100) nach Anspruch 1 oder 2, wobei der Baubox-Fahrantrieb (250) zum Antreiben eines an der Baubox (200) befestigten Zahnrads (254) ausgebildet ist, welches mit dem Fahrantrieb gekuppelt und insbesondere mit horizontaler Radebene angeordnet ist.

4. Anlage (100) nach einem der Ansprüche 1 bis 3, wobei der Baubox-Fahrantrieb (250) an der Außenseite von einer der Bauboxwände bevorzugt mit vertikaler Antriebsachse angeordnet ist.

5. Anlage (100) nach einem der Ansprüche 1 bis 4, wobei auf jeder Seite der Baubox (200) mindestens eine seitliche Führungsrolle (240) vorgesehen ist, welche insbesondere an der Unterseite der Baubox (200) befestigt sind.

6. Anlage (100) nach einem der Ansprüche 1 bis 5, wobei eine der beiden Seitenwände (226) eine sich verjüngende Ausricht-Vertiefung (226b) aufweist, und/oder wobei die Baubox (200) an ihrer Unterseite ein Paar von Kufen (242) aufweist.

7. Anlage (100) nach einem der Ansprüche 1 bis 6, wobei die Bauplattform (210) höhenverstellbar ist und die Baubox (200) einen eigenen in die Baubox integrierten Bauplattform-Hubantrieb (260) aufweist zum Anheben und Absenken der Bauplattform (210).

8. Anlage (100) nach Anspruch 3, wobei das Schienensystem (140) eine insbesondere seitlich ausgerichtete Zahnstange (143) aufweist, in die das Zahnrad (254), das an der Baubox (200) befestigt ist, eingreift.

9. Anlage (100) nach Anspruch 5, wobei das Schienensystem (140) zwei Führungsschienen (141, 142) aufweist, an denen die seitlichen Führungsrollen (240) seitlich abrollen können.

10. Anlage (100) nach Anspruch 6, wobei an dem Rahmen (150) der Anlage (100) ein Ausrichtelement (152), das senkrecht zur Verfahrrichtung der Baubox horizontal verstellbar ist, angebracht ist, welches einen sich verjüngenden Endabschnitt aufweist, der in der Baubox-Bauposition seitlich in die Vertiefung (226b) der Seitenwand (226) eingreift.

11. Anlage (100) nach einem der vorangehenden Ansprüche, wobei die Baubox (200) über eine Schleppkette (270) elektrisch mit der Anlage (100) in Verbindung steht, insbesondere mit einer zentralen Steuereinrichtung und/oder einer zentralen Stromversorgung der Anlage (100).

12. Anlage (100) nach einem der vorangehenden Ansprüche, ferner aufweisend ein Gehäuse (110), welches den Rahmen (150) der Anlage (100) umgibt, wobei das Gehäuse (110) eine Baubox-Einfahr/Ausfahr-Öffnung (130) aufweist, durch welche hindurch die Baubox (200) zwischen der Baubox-Bauposition, in der die Baubox (200) in dem Gehäuse (110) angeordnet ist, und der zusätzlichen Baubox-Position, in der die Baubox (200) außerhalb des Gehäuses (110) angeordnet ist, verfahrbar ist, und wobei die Baubox-Einfahr/Ausfahr-Öffnung (130) in der Baubox-Bauposition durch die Rückseite (223) oder Vorderseite der Baubox (200) geschlossen wird.

13. Anlage (100) nach einem der vorangehenden Ansprüche, aufweisend:
eine erste Baubox (200) nach einem der Ansprüche 1 bis 7 und
eine zweite Baubox (200') nach einem der Ansprüche 1 bis 7,
wobei die erste Baubox (200) entlang dem Schienensystem (140) zwischen einer ersten Baubox-Entpackungsposition und einer gemeinsamen Baubox-Bauposition verfahrbar ist,
wobei die zweite Baubox (200) entlang dem Schienensystem (140) zwischen einer zweiten Baubox-Entpackungsposition und der gemeinsamen Baubox-Bauposition verfahrbar ist, und
wobei die erste Baubox-Entpackungsposition und die zweite Baubox-Entpackungsposition auf entgegengesetzten Seiten des Rahmens (150) angeordnet sind, der an den entgegengesetzten Seiten jeweils eine Baubox-Öffnung aufweist, durch welche die jeweilige Baubox (200, 200') verfahrbar ist.

## Claims

1. A device (100) for the layered construction of a shaped body by forming layers of construction material lying one upon another and by selectively solidifying a partial area of the respective construction material layer prior to forming the next layer, comprising:
a construction box (200), comprising
a front wall (220), a rear wall and two lateral walls (224, 226) which together limit a construction box interior space in which a construction platform (210) is received, and
an own construction box travel drive (250) integrated in the construction box for moving the construction box (200) between a construction box construction position in which the construction box (200) is arranged in a frame (150) of the device (100) for constructing the shaped body, and an additional construction box position, wherein the additional construction box position of the construction box is a construction box unpacking position in which the construction box (200) is moved out of the frame (150) of the device (100), and
a rail system (140), along which the construction box (200) is movable between the construction box construction position and the additional construction box position by means of the construction box travel drive (250).

2. Device (100) according to claim 1, wherein the construction box travel drive (250) integrated in the construction box is configured as an electric travel drive.

3. Device (100) according to claim 1 to 2, wherein the construction box travel drive (250) is configured to drive a gearwheel (254) fixed to the construction box (200), which is coupled to the travel drive and which is optionally arranged with a horizontal wheel plane.

4. Device (100) according to any of claims 1 to 3, wherein the construction box travel drive (250) is arranged on the outer side of one of the construction box walls, for example with a vertical drive axle.

5. Device (100) according to any of claims 1 to 4, wherein at least one lateral guide roll (240) is provided on each lateral side of the construction box (200), wherein the lateral guide rolls (240) are optionally fixed to the lower side of the construction box (200).

6. Device (100) according to any of claims 1 to 5, wherein one of the two lateral walls (226) comprises a tapering alignment recess (226b), and/or wherein the construction box (200) has a pair of skids (242) on its lower side.

7. Device (100) according to any of claims 1 to 6, wherein the construction platform (210) is height-adjustable and the construction box (200) comprises its own construction platform lift drive (260) integrated in the construction box for lifting and lowering the construction platform (210).

8. Device (100) according to claim 3, wherein the rail system (140) comprises a rack (143) oriented for example laterally, with which the gearwheel (254) that is fixed to the construction box (200) is engaged.

9. Device (100) according to claim 5, wherein the rail system (140) comprises two guide rails (141, 142) on which the lateral guide rolls (240) can roll off laterally.

10. Device (100) according to claim 6, wherein an alignment member (152) that is adjustable horizontally perpendicular to the moving direction of the construction box is attached to the frame (150) of the device (100), which comprises a tapering end portion that is laterally engaged with the recess (226b) of the side wall (226) in the construction box construction position.

11. Device (100) according to any of the preceding claims, wherein the construction box (200) is electrically connected to the device (100) by a drag chain (270), for example with a central controller and/or a central electric power supply of the device (100).

12. Device (100) according to any of the preceding claims, further comprising a housing (110) surrounding the frame (150) of the device (100), wherein the housing (110) comprises a construction box move-in/move-out opening (130) through which the construction box (200) is movable between the construction box construction position in which the construction box (200) is arranged in the housing (110), and the additional construction box position in which the construction box (200) is arranged outside the housing (110), and wherein the construction box move-in/move-out opening (130) is closed by the rear side (223) or the front side of the construction box (200) in the construction box construction position.

13. Device (100) according to any of the preceding claims, comprising:
a first construction box (200) according to any of claims 1 to 7, and
a second construction box (200') according to any of claims 1 to 7,
wherein the first construction box (200) is movable along the rail system (140) between a first construction box unpacking position and a common construction box construction position,
wherein the second construction box (200) is movable along the rail system (140) between a second construction box unpacking position and the common construction box construction position, and
wherein the first construction box unpacking position and the second construction box unpacking position are arranged on opposite sides of the frame (150) which on the opposite sides respectively comprises a construction box opening through which the respective construction box (200, 200') is movable.

## Revendications

1. Installation (100) pour la structuration par couches d'un corps moulé par réalisation de couches superposées de matériau de construction et par solidification sélective d'une zone partielle de chaque couche de matériau de construction avant réalisation de la couche suivante, comprenant :
une caisse de construction (200) comportant
une paroi avant (220), une paroi arrière et deux parois latérales (224, 226), qui délimitent ensemble un intérieur de caisse de construction où est logée une plate-forme de construction (210), et
un entraînement (250) de caisse de construction propre, intégré à la caisse de construction, pour le déplacement de la caisse de construction (200) entre une position de construction de caisse, où la caisse de construction (200) est disposée dans un cadre (150) de l'installation (100) pour la structuration du corps moulé, et une autre position de caisse, l'autre position de la caisse de construction étant une position de déballage de la caisse de construction, où la caisse de construction (200) est sortie du cadre (150) de l'installation (100), et
un système à rails (140) le long duquel la caisse de construction (200) est déplaçable entre la position de construction de caisse et l'autre position de caisse au moyen de l'entraînement (250) de caisse de construction.

2. Installation (100) selon la revendication 1, dans laquelle l'entraînement (250) de caisse de construction intégré à la caisse de construction est réalisé comme entraînement électrique.

3. Installation (100) selon la revendication 1 ou la revendication 2, dans laquelle l'entraînement (250) de caisse de construction est prévu pour l'entraînement d'un pignon (254) fixé sur la caisse de construction (200), lequel est accouplé à l'entraînement et est notamment disposé sur un plan horizontal de pignon.

4. Installation (100) selon l'une des revendications 1 à 3, dans laquelle l'entraînement (250) de caisse de construction est disposé sur la face extérieure d'une des parois de la caisse de construction, préférentiellement avec un axe d'entraînement vertical.

5. Installation (100) selon l'une des revendications 1 à 4, dans laquelle au moins un galet de guidage (240) latéral est prévu sur chaque côté de la caisse de construction (200), fixé en particulier contre le dessous de la caisse de construction (200).

6. Installation (100) selon l'une des revendications 1 à 5, dans laquelle une des deux parois latérales (226) présente un évidement d'ajustement (226b) aminci, et/ou dans laquelle la caisse de construction (200) présente une paire de patins (242) sur son dessous.

7. Installation (100) selon l'une des revendications 1 à 6, dans laquelle la plate-forme de construction (210) est réglable en hauteur, et dans laquelle la caisse de construction (200) comporte un entraînement de levage (260) de plate-forme de construction propre intégré à la caisse de construction pour l'élévation et l'abaissement de la plate-forme de construction (210).

8. Installation (100) selon la revendication 3, dans laquelle le système à rails (140) comporte une crémaillère (143) ajustée en particulier sur le côté, avec laquelle s'engrène le pignon (254) fixé sur la caisse de construction (200).

9. Installation (100) selon la revendication 5, dans laquelle le système à rails (140) comporte deux rails de guidage (141, 142) sur lesquels les galets de guidage (240) latéraux peuvent rouler latéralement.

10. Installation (100) selon la revendication 6, dans laquelle un élément d'ajustement (152) réglable horizontalement, perpendiculairement à la direction de déplacement de la caisse de construction, est disposé contre le cadre (150) de l'installation (100) et présente une partie d'extrémité amincie qui s'engage latéralement dans l'évidement (226b) de la paroi latérale (226) en position de construction de la caisse.

11. Installation (100) selon l'une des revendications précédentes, dans laquelle la caisse de construction (200) est connectée électriquement par une chaîne porte-câble (270) à l'installation (100), en particulier à un dispositif de commande central et/ou à une alimentation centrale en courant de l'installation (100).

12. Installation (100) selon l'une des revendications précédentes, comprenant en outre un carter (110) entourant le cadre (150) de l'installation (100), ledit carter (110) comportant une ouverture de rentrée/de sortie (130) de la caisse de construction par laquelle la caisse de construction (200) est déplaçable entre la position de construction de caisse, où la caisse de construction (200) est disposée dans le carter (110), et l'autre position de caisse de construction, où la caisse de construction (200) est disposée à l'extérieur du carter (110), et l'ouverture de rentrée/de sortie (130) étant en position de construction de caisse fermée par le côté arrière (223) ou le côté avant de la caisse de construction (200).

13. Installation (100) selon l'une des revendications précédentes, comprenant :
une première caisse de construction (200) selon l'une des revendications 1 à 7, et
une deuxième caisse de construction (200') selon l'une des revendications 1 à 7,
dans laquelle la première caisse de construction (200) est déplaçable le long du système à rails (140) entre une première position de déballage de caisse et une position de construction de caisse commune,
dans laquelle la deuxième caisse de construction (200) est déplaçable le long du système à rails (140) entre une deuxième position de déballage de caisse et la position de construction de caisse commune, et
dans laquelle la première position de déballage de caisse et la deuxième position de déballage de caisse sont prévues sur des côtés opposés du cadre (150), lequel présente sur chacun de ses côtés opposés une ouverture de caisse de construction par laquelle chaque caisse de construction (200, 200') peut être déplacée.
